(19) Europäisches Patentamt

European Patent Office

Office européen des brevets

(11) **EP 1 285 719 B1**

(12) **EUROPÄISCHE PATENTSCHRIFT**

(45) Veröffentlichungstag und Bekanntmachung des Hinweises auf die Patenterteilung:
**17.11.2004 Patentblatt 2004/47**

(51) Int Cl.$^7$: **B23K 26/42**, B23K 13/01, C21D 6/02

(21) Anmeldenummer: **02016943.9**

(22) Anmeldetag: **01.08.2002**

(54) **Verfahren zur Erzeugung von verschleissbeständigen Randschichten mittels Laser**

Method for making wear-resistant surface layers using laser

Procédé pour la production de couches superficielles résistant à l'usure avec laser

(84) Benannte Vertragsstaaten:
**AT BE BG CH CY CZ DK EE ES FI FR GB GR IE IT LI LU MC NL PT SE SK TR**

(30) Priorität: **02.08.2001 DE 10137776**

(43) Veröffentlichungstag der Anmeldung:
**26.02.2003 Patentblatt 2003/09**

(73) Patentinhaber: **Fraunhofer-Gesellschaft zur Förderung der angewandten Forschung e.V. 80686 München (DE)**

(72) Erfinder:
• **Brenner, Berndt 01328 Dresden (DE)**
• **Fux, Volker 01796 Pirna (DE)**

(56) Entgegenhaltungen:
**EP-A- 0 190 378**     **EP-A- 0 462 047**
**US-A- 5 554 837**     **US-B1- 6 191 379**

• **BRENNER B ET AL: "INDUKTIV UNTERSTUETZTES LASERAUFTRAGSCHWEISSEN - EINE HYBRIDTECHNOLOGIE UEBERWINDET ANWENDUNGSGRENZEN" EUROPEAN CONFERENCE ON LASER TREATMENT AND MATERIALS, XX, XX, 16. September 1996 (1996-09-16), Seiten 469-476, XP001119576**
• **BRENNER B ET AL: "INDUKTIV UNTERSTUETZTES LASERUMSCHMELZEN" HAERTEREI TECHNISCHE MITTEILUNGEN, CARL HANSER VERLAG. MUNCHEN, DE, Bd. 52, Nr. 2, 1. März 1997 (1997-03-01), Seiten 83-90, XP000688758 ISSN: 0341-101X**
• **KHERSONSKY A ET AL: "INDUCTION HEATING FOR EFFICIENT LASER APPLICATIONS" ADVANCED MATERIALS AND PROCESSES, AMERICAN SOCIETY FOR METALS, METALS PARK, OH, US, Bd. 157, Nr. 2000, April 2000 (2000-04), Seiten 39-41, XP001119385 ISSN: 0882-7958**

## Beschreibung

Die Erfindung bezieht sich auf ein Verfahren zur effektiven Herstellung von hochverschleißfesten Schichten auf induktiv erwärmbaren Werkstücken. Objekte, bei denen ihre Anwendung möglich und zweckmäßig ist, sind eine Vielzahl von abrasiv, korrosiv, adhäsiv oder gleitverschleißbeanspruchten Bauteilen, bevorzugt aus Stahl, aber auch aus Gusseisen oder Aluminium- bzw. Titanlegierungen. Besonders vorteilhaft ist die Erfindung auf alle härtbaren oder rissempfindlichen Stähle, wie z. B. Vergütungsstähle, Werkzeugstähle, Kaltarbeitsstähle, Wälzlagerstähle und härtbare Graugusssorten anwendbar. Bauteile, für die diese Erfindung nutzbar ist, sind z. B.: Motorkomponenten, Pumpenwellen, Wärmetauscher und Wärmetauscherrohre, Umformwerkzeuge, Bauteile der Ölförderindustrie, Nockenwellen, Nockenhebel, Ventile o. ä..

Es ist bekannt, dass sich mit Hilfe des Laserauftragschweißens Bauteile aus metallischen Konstruktionswerkstoffen wirkungsvoller und selektiver gegen Verschleiß schützen lassen, als mit den klassischen Verfahren wie z. B. dem WIG- oder Plasmapulverauftragschweißen, dem Flammspritzen oder dem Plasmaspritzen. Die Ursachen der besseren tribologischen und korrosiven Beständigkeit liegen u. a. in der geringeren Aufmischung mit dem Grundwerkstoff der mit dem Laser erzeugbaren Schichten. Möglich wird dies letztlich durch den sehr lokalisierbaren und gut steuerbaren Energieeintrag mit vergleichsweise hohen Leistungsdichten und den daraus resultierenden kurzen Prozesszeiten.

Für eine Reihe von Anwendungsfällen, insbesondere solchen mit großen verschleißbeanspruchten Oberflächen wirkt sich jedoch negativ aus, dass die Kosten der mit dem Laserauftragschweißen hergestellten Schichten zu hoch sind. Die Ursache dieses Mangels liegt darin, dass die spezifischen Energiebereitstellungskosten beim Laser deutlich höher sind als bei anderen konventionellen Energiequellen wie z. B. dem WIG- oder Plasmabrenner.

Ein zweiter Mangel besteht darin, dass die durch das Laserauftragschweißen erzeugten Schichten i. a. eher zur Rissbildung neigen, als die mit konventionellen Verfahren erzeugten, wenn zu härteren und damit weniger duktilen Beschichtungswerkstoffen oder martensithärtenden Substratwerkstoffen übergegangen wird. Die Ursache dieses Mangels ergibt sich daraus, dass der mit der Lasereinwirkung angestrebte und realisierte sehr intensive Energieeintrag mit sehr hohen Leistungsdichten verbunden ist, die zu großen Temperaturgradienten und damit zu solch hohen transienten thermischen Spannungen in der Abkühlphase führen, die für eine Vielzahl von Beschichtungs- und Substratwerkstoffen nicht mehr rissfrei ertragen werden können.

Zur gleichzeitigen Abstellung beider Mängel ist bekannt, mit einer induktiven Zusatzenergiequelle die zu beschichtenden Gebiete vorzuwärmen. (vgl. z: B: B. Brenner, V. Fux, A. Wetzig, S. Nowotny: "Induktiv unterstütztes Laserauftragschweißen - eine Hybridtechnologie überwindet Anwendungsgrenzen", 6th European Conference on Laser Treatment of Materials, Stuttgart 16.-18.09.1996, Tagungsband S. 469-476, dieses Dokument wird als nächstkommender Stand der Technik angesehen). Die induktive Vorwärmung wirkt sich bezüglich der Verringerung des Temperaturgradienten und der damit möglichen Absenkung der transienten Spannungen besonders effektiv aus, weil der Energieeintrag nicht nur über die Oberfläche, sondern in einer durch die Induktionsfrequenz festlegbaren Tiefe erfolgt. Darüber hinaus sind die spezifischen Energiebereitstellungskosten für die eingekoppelte induktive Energie mindestens eine Größenordnung niedriger als für die Laserenergie.

So beanspruchen Yoshiwara und Kawanami ["Method for surface-alloying metal with a highdensity energy beam and an alloy steel", EP 0190378A1] einen Prozess, bei dem ein mit einer Laserstrahlfokussiereinheit fest verbundener Induktor oder ein Sauerstoff-Azethylenbrenner in Vorschubrichtung vor dem laserbestrahlten Gebiet auf das Werkstück einwirken. Die so vorgewärmte Fläche ist größer als die anschließend laserbestrahlte. Dem entsprechend ergibt sich ein instationäres Vorwärm-Temperaturfeld mit einem Maximum, das etwas in Richtung Laserstrahl verschoben ist und dem laserstrahlerzeugten Temperaturfeld vorweg läuft. Ergänzend dazu kann die gleiche Anordnung zusätzlich hinter dem Laserstrahlpunkt angeordnet werden und so eine Nachwärmung realisieren. Die Energiemenge, die durch die zweite Energiequelle geliefert wird, soll ein substantieller Teil der nötigen Gesamt-Prozessenergie sein, aber kleiner bleiben als die durch den Laserstrahl bereitgestellte Energiemenge. Die in EP 0190378A1 beschriebene Anordnung kann vorzugsweise für sehr große Werkstücke angewendet werden. Mit ihr gelang es, unter Verwendung eines Sauerstoff-Azethylenbrenners (Daten für eine induktive Vorwärmung werden nicht angegeben) in die Randschicht des Substratwerkstoffes 17Cr2W1Ni (Werkzeugstahl; chemische Zusammensetzung: 1,74 % C; 17,4 %Cr; 1,78 % W; 0,92 % Ni; Rest Fe) bei einer Spitzentemperatur des Vorwärmzyklus von 700 °C rissfrei eine in der gleichen PS beanspruchte Legierung einzulegieren. Die erreichte Vorschubgeschwindigkeit lag um 75 % höher als die ohne Vorwärmen erreichte Geschwindigkeit (2,4 m/min bei 10 kW Laserleistung).

Der Mangel des Verfahrens besteht darin, dass die Vorschubgeschwindigkeit nicht in dem Maße gesteigert werden kann, wie das aus Abschätzungen der Energiebilanz heraus eigentlich möglich sein sollte. Die Ursache dafür resultiert daraus, dass die mit einem Induktor (geringere Energieübertragungseffektivität durch Nutzung des induktiven Außenfeldes) oder mit einem Sauerstoff-Azethylen-Brenner in der beanspruchten Anordnung erzeugbaren Temperaturfelder nicht ausreichend genug an die Erfordernisse des Laserlegierens oder des Laserauftragschweißens angepasst werden können. Bewegt sich die Zusatzenergiequelle, die etwa die gleiche Energie wie der Laserstrahl einbringt, aber eine viel geringere Leistungsdichte aufweist, im Vorlauf und mit der gleichen Vorschubgeschwindigkeit wie der Laserstrahl, so kann keine optimale Maximaltemperatur erreicht werden. Darüber hinaus ist die Temperatur des Vorwärmtemperaturfeldes zum Zeitpunkt des Passierens des Laserstrahles so weit abgefallen, dass sich kein wesentlicher Effekt hinsichtlich der Erhöhung der Vorschubgeschwindigkeit ergeben kann.

Höhere Vorschubgeschwindigkeiten werden der Lösung aus EP 0190378A1 zufolge erreicht, indem das ganze Bauteil vor der vorstehend beschriebenen Behandlung einer zusätzlichen durchgreifenden Vorerwärmung in einem Ofen (inventive method (2)) unterzogen wird. Die Vorwärmtemperatur der Ofenerwärmung beträgt bis 600 °C. Wird die Spitzentemperatur des Kurzzeit-Vorwärmzyklus' mittels des oben erwähnten Sauerstoff-Azethylen-Brenners auf 800 °C gesteigert, gelingt es, die Vorschubgeschwindigkeit bei gleichen Laserparametern auf 5,4 m/min oder entsprechend auf 225 % zu steigern.

Als mangelhaft erweist sich jedoch, dass die Vorbehandlung im Ofen sehr aufwendig, langdauernd und teuer ist. Darüber hinaus wirkt sich nachteilig aus, dass die Bauteile im heißen Zustand transportiert, positioniert und eingespannt werden müssen. Die Ursache für beide Mängel liegt darin, dass die Teile in einer separaten Einrichtung durchgreifend erwärmt werden müssen.

Ein weiterer Mangel ist darin zu sehen, dass wegen der zunehmenden Oxidation des Bauteils die Vorwärmtemperatur auf etwa 600 °C begrenzt ist. Dadurch sind auch die Möglichkeiten einer weiteren Geschwindigkeitssteigerung erschöpft.

Eine höhere Vorwärmtemperatur wirkt sich dahingehend auf die Qualität der auflegierten Schicht aus, dass Oxideinschlüsse bzw. Poren entstehen, die die mechanische Belastbarkeit der Schichten und deren Verschleißbeständigkeit herabsetzen. In der genannten Erfindungsschrift wird versucht, dieses Problem zu lösen, indem dem Beschichtungswerkstoff desoxidierende Elemente und Schlackebildner zugesetzt werden. Infolge stochastischer Schmelzbadturbulenzen kann jedoch nicht sichergestellt werden, dass alle Schlacketeilchen bzw. Metalloxide bis an die Schmelzbadoberfläche aufsteigen. Damit sind diese Beschichtungen nicht für Belastungen, bei denen sehr hohe Flächenpressungen oder zyklische Spannungen auftreten, geeignet.

Guilloud, Dekumbis und Gonseth [EP 0462047B1 "Verfahren zum Herstellen von Oberflächenschichten auf Werkstücken, Vorrichtung zum Durchführen des Verfahrens sowie Werkstück mit nach dem Verfahren hergestellter Oberflächenschicht"] geben ein Verfahren zum Laserauftragschweißen der Dichtflächen von Motorventilen an, bei dem wenigstens die gesamte Funktionsfläche des zu beschichtenden Bauteiles vor dem Laserauftragschweißen durch eine induktive Vorwärmung einheitlich auf eine konstante Temperatur erwärmt wird, der Laserstrahl ins Zentrum oder in die Nähe des Zentrums des induktiv beheizten Gebietes gebracht wird und die induktive Erwärmung des gesamten vorgewärmten Gebietes während des Laserauftragschweißens aufrecht erhalten wird. Als induktive Vorwärmtemperatur wird für das beanspruchte Anwendungsbeispiel Panzern von Pkw-Ventilen eine Temperatur von 800 °C angegeben. In einer weiteren Arbeit gibt Dekumbis ["Beschichten von Automobilventilen mit der Laserinduktions-Technologie", elektrowärme international, Jahrgang 51 (1993) B3, Heft September, Seite B113-B115] die damit erreichte Steigerung der Prozessgeschwindigkeit mit lediglich 30 % an, ohne jedoch Absolutwerte zu nennen. Das deutet darauf hin, dass in der Praxis weit geringere Vorwärmtemperaturen verwendet wurden.

Ein wesentlicher Mangel des Verfahrens resultiert daraus, dass offensichtlich nur sehr geringe Steigerungen der Prozessgeschwindigkeiten erreicht werden können. Die wesentlichste Ursache dafür liegt darin, dass die gesamte Funktionsfläche für die Gesamtdauer des Laserauftragschweißens auf der hohen Vorwärmtemperatur gehalten werden muss.

Wegen der mit der Temperatur stark zunehmenden Oxid- und Zunderbildung ist eine Erhöhung der Vorwärmtemperatur zu höheren Temperaturwerten für größere Haltezeiten, wie sie zur Durchführung dieses Verfahrens an größeren Bauteilen nötig sind, nicht möglich. Das trifft in verschärftem Maße dann zu, wenn normale Stähle, die weit weniger oxidations- und zunderbeständig sind als die betrachteten Ventilstähle, deren chemische Zusammensetzung auf eine Anwendung bei höheren Temperaturen hin optimiert wurde, verwendet werden.

Ein weiterer Mangel des Verfahrens besteht darin, dass es nur schwer auf größere und insbesondere kompliziert geformte Werkstücke übertragbar ist. Die Ursache dafür besteht darin, dass sehr kompliziert geformte Induktoren entwickelt, erprobt und optimiert werden müssen.

Ziel der Erfindung ist es, ein neuartiges Vorwärmverfahren zum Randschichtveredeln und dabei insbesondere zum Laserrandschichtveredeln anzugeben, mit dem deutlich höhere Vorschubgeschwindigkeiten bei gleichzeitiger Vermeidung von Rissen in der Schicht oder dem Substratwerkstoff auch bei der Anwendung auf rissempfindliche Substratwerkstoffe wie z. B. martensithärtenden oder Härteriss-empfindlichen Stählen und sehr verschleißbeständigen, sehr harten Beschichtungswerkstoffen mit eingeschränkter Duktilität erreicht werden können.

Der Erfindung liegt die Aufgabe zugrunde, eine Temperaturführung zur Vorwärmung beim Randschichtveredeln und insbesondere beim Laserstrahlrandschichtveredeln und Mittel zu seiner Realisierung anzugeben, die es gestatten, zumindest sehr kurzzeitig und unmittelbar vor dem Veredlungsverfahren höhere Vorwärmtemperaturen ohne Verzunderung der Bauteile zu erreichen, wobei für größere Funktionsflächen das Temperaturfeld nicht homogen über die gesamte Funktionsfläche für die Gesamtdauer des Veredlungsprozesses gehalten werden darf, die Abkühlgeschwindigkeit im risskritischen Temperaturbereich unabhängig oder nahezu unabhängig von der Spitzentemperatur eingestellt und die Erzeugung des Temperaturfeldes prozessintegriert erfolgen kann. Die Mittel zur Erzeugung sollen darüber hinaus so flexibel gestaltbar sein, dass das nötige Temperaturfeld auch relativ einfach an komplizierter geformten Bauteilen erzeugt werden kann.

Erfindungsgemäß wird diese Aufgabe mit einem Verfahren zur Erzeugung von verschleißbeständigen Randschichten mittels einer induktiv unterstützten Laserstrahlbehandlung auf induktiv erwärmbaren Werkstücken wie in Anspruch 1 dargestellt gelöst. Vorteilhafte Ausgestaltungen sind in den Unteransprüchen 2 bis 27 aufgezeigt.

Dazu wird erfindungsgemäß von den neuen Erkenntnissen Gebrauch gemacht, dass

- zur Rissvermeidung an rissempfindlichen Substratwerkstoffen oder sehr harten und weniger duktilen Beschichtungswerkstoffen kein stationäres oder nahezu stationäres Temperaturfeld nötig ist,

- die erreichbaren Vorschubgeschwindigkeiten bei Vorwärmtemperaturen größer als etwa 400 °C überproportional zum Wert der lokalen Vorwärmtemperatur beim Beginn des Laserauftragschweißens steigen,

- eine Verzunderung oder sogar eine stärkere Oxidation bei sehr kurzen Verweilzeiten bis zu sehr hohen Spitzentemperaturen verhindert oder in akzeptablen Grenzen gehalten werden oder durch eine einfache Schutzgasspülung wirkungsvoll reduziert werden kann,

- eine geringe Oxidation für den Beschichtungsprozess vorteilhaft und die resultierenden Schichteigenschaften nicht hinderlich ist und dass

- der Beschichtungsprozess entgegen der Meinung der Fachwelt selbst bei sehr hohen Vorwärmtemperaturen unerwartet stabil verläuft.

Entsprechend Anspruch 1 besteht das Vorwärmtemperaturfeld des erfindungsgemäßen Verfahrens aus zwei überlagerten inhomogenen und instationären Temperaturfeldern $T_1(\vec{r}, t)$ und $T_2(\vec{r}, t)$. Sie bilden die ineinander übergehenden Vorwärmzyklen $V_1$ und $V_2$. Die Überlagerung erfolgt dabei so, dass das generelle Temperaturmaximum im Vorwärmzyklus $V_2$ erreicht wird und dieses Temperaturmaximum $T_{1max}$ in Richtung des Laserstrahlauftreffpunktes $L_p$ positioniert ist. Sowohl die Maximaltemperatur $T_{2max}$ als auch der Temperaturgradient

$$\left(\frac{\Delta T_{2\,max}}{\Delta t_2}\right)$$

sind wie in Anspruch 1 ausgeführt größer und die entsprechenden Wärmeeinwirkzeiten $\Delta t_2$ kleiner als die entsprechenden Werte $T_{1max}$,

$$\left(\frac{\Delta T_{1\,max}}{\Delta t_1}\right),$$

$\Delta t_1$ des Vorwärmzyklus $V_1$. Dadurch werden alle Vorteile einer hohen Vorwärmtemperatur wie z. B. eine vorteilhaftere energetische Arbeitsteilung zwischen der bezogen auf die eingebrachte Leistung teuren Laserenergie und der preiswerten induktiven Energie und eine entscheidend höhere Vorschubgeschwindigkeit erreicht, ohne die Nachteile einer hohen, größere Volumenbereiche erfassenden Vorwärmtemperatur wie z. B. zu große Wärmebelastung, Verzug, Gefügeschädigung in Kauf nehmen zu müssen. Gleichzeitig kann durch das unterlagerte Temperaturfeld T, eine zu hohe Abkühlgeschwindigkeit in rissbildungskritischen Temperaturbereichen vermieden und damit auch bei kritischen rissempfindlichen Substratwerkstoffen oder Beschichtungslegierungen eine Rissbildung vermieden werden. Durch die getrennte Einstellung der Parameter können bisher nicht mögliche Vorschubgeschwindigkeiten bei garantierter Rissvermeidung erreicht werden.

In den Ansprüchen 2 bis 7 werden geeignete und besonders vorteilhafte Induktoranordnungen zur Erzeugung des erfindungsgemäßen Temperaturfeldes beschrieben. Anspruch 2 gibt eine einfache Anordnung an, wie mit Hilfe von zwei separaten Induktoren das erfindungsgemäße Temperaturfeld erzeugt werden kann. Die Ansprüche 3 und 4 machen in vorteilhafter Weise von der Tatsache Gebrauch, dass die Eindringtiefe des induktiven Feldes und damit auch die Tiefe bis in welche induktive Wärme erzeugt wird, mit der Induktionsfrequenz abnimmt. Das kann dazu genutzt werden, um die Einwärmtiefe des Vorwärmzyklus $V_2$ auf das für die Geschwindigkeitssteigerung des Laserbearbeitungsprozesses notwendige Maß zu reduzieren. Ohne Verletzung des Erfindungsgedankens können die beiden Induktoren $I_1$ und $I_2$ auch räumlich getrennt voneinander angeordnet werden. So z. B. kann der Induktor $I_1$ in einer separaten Vorwärmstation völlig oder nahezu völlig taktzeitparallel zur Laserstrahlbehandlung das Bauteil im Vorwärmzyklus $V_1$ aufwärmen, während der induktor $I_2$ z. B. mit dem Laserstrahlbearbeitungskopf körperlich verbunden sein kann und im Vorlauf zum Laserstrahl den Vorwärmzyklus $V_2$ erzeugt.

Für Anwendungen insbesondere an größeren Bauteilen können jedoch auch, wie in Anspruch 5 und 6 ausgeführt, beide Vorwärmzyklen $V_1$ und $V_2$ durch einen einzigen, entsprechend ausgebildeten Induktor $I_G$ erzeugt werden. Diese Vorgehensweise ist betriebswirtschaftlich besonders günstig, weil nur ein Induktionsgenerator benötigt wird.

Weitere Varianten, wie nur mit einem Induktor das erfindungsgemäße Temperaturfeld vorteilhaft erzeugt werden kann, sind in den Ansprüchen 7 bis 11 beschrieben. Anspruch 7 macht dabei von der Tatsache Gebrauch, dass bei konstanten Einkoppelverhältnissen die eingetragene Wärmemenge mit der Einwirkdauer zunimmt. Durch eine oszillierende Bewegung des Induktors mit einer entsprechend ausgewählten Bewegungsfunktion lassen sich die erfindungsgemäßen Vorwärmzyklen $V_1$ und $V_2$ sowie deren Überlagerung erzeugen.

Die Realisierung der Vorwärmzyklen entsprechend Anspruch 8 bis 11 ist insbesondere für größere ebene oder rotationssymmetrische Bauteile vorgesehen, deren Funktionsflächen so breit sind, dass sie durch spurweises Abrastern behandelt werden müssen. Die pulsierenden Temperaturzunahmen $\Delta T_{1n}{}^*$ im Vorwärmzyklus kommen dabei dadurch zustande, dass jeder zu behandelnde Ort auf dem Bauteil mittels des fest mit dem Laserbearbeitungskopf verbundenen Induktors $I_{12b}$, dessen Einwirkzonenbreite quer zur Vorschubrichtung größer als der Spurabstand a ist, mehrfach überfahren wird und die gesamte Anordnung nach Aufbringen einer Spur um den gewünschten Spurabstand a verschoben wird. Dadurch wird die Spitzentemperatur des Vorwärmzyklus $T_{1max}$ pulsierend erreicht. Die stärkere und schnellere Temperaturzunahme $\Delta T_2{}^*$ im Vorwärmzyklus $V_2$ kann z. B. durch eine intensivere Energieeinkopplung durch das sich direkt vor dem Laserstrahlauftreffpunkt $L_p$ befindliche Induktorteil erreicht werden.

Der Erfindungsgedanke ist nicht darauf beschränkt, dass die Energieeinbringung zur Erzeugung des Vorwärmzyklus $V_2$ induktiv erfolgen muss. Ohne Verletzung des Erfindungsgedankens können dazu wie in Anspruch 13 vermerkt, auch ein oder mehrere, geeignet angeordnete Hochleistungsdiodenlaser verwendet werden.

Anspruch 14 nutzt in vorteilhafter Weise die Erkenntnis aus, dass eine Oxidation in dem angegebenen Ausmaß für den Laserbearbeitungsprozess und die daraus resultierenden tribologischen und mechanischen Eigenschaften nicht schädlich ist und zudem darüber hinaus die Absorption der Laserenergie verbessert. Wie Experimente ergeben haben, reicht für die Verhinderung einer weitergehenden Oxidation u. U. die alleinige Inertgasabschirmung der Vorwärmzone des Vorwärmzyklus $V_2$ aus.

Das erfindungsgemäße Verfahren ist nicht auf das im Stand der Technik beschriebene Laserauftragschweißen bzw. Laserlegieren beschränkt. Wie in Anspruch 17 bis 19 ausgewiesen ist, kann es gleichermaßen vorteilhaft auch für das Laserumschmelzen, Laserlöten und mit zusätzlichen Mitteln zur Einstellung und Konstanthaltung spezieller Prozessgasmischungen auch für das Lasergaslegieren eingesetzt werden.

Entgegen der Meinung der Fachwelt stellte sich heraus, dass die Substratanschmelzung auch bei sehr hohen erfindungsgemäßen Vorwärmtemperaturen sehr gut kontrolliert bzw. vermieden werden kann. Davon macht Anspruch 19 in vorteilhafter Weise Gebrauch, indem das Vorwärmverfahren auf einen Laserlötprozess angewendet wird.

Wie in Anspruch 20 dargelegt ist, kann für besonders rissempfindliche Werkstoffe auch ein Nachwärmzyklus $N_1$ an den Laserprozesszyklus L angeschlossen werden. Vorzugsweise wird dieser Nachwärmzyklus $N_1$, wie in Anspruch 21 ausgeführt, auch durch induktive Wärmezufuhr erzeugt. Betriebswirtschaftlich besonders günstige Lösungen ergeben sich nach Anspruch 22, wenn der Induktor $I_3$ so gestaltet wird, dass sowohl die Vorwärmzyklen $V_1$ und $V_2$ als auch der Nachwärmzyklus N, mit diesem einzigen Induktor realisiert werden können. Dazu können die nach den Ansprüchen 5, 6, 7 und 10 dargelegten Induktoren entsprechend modifiziert werden.

Anspruch 23 macht von der Erkenntnis vorteilhaft Gebrauch, dass die bei härtbaren Stählen unter der auftraggeschweißten, legierten, hartgelöteten oder umgeschmolzenen Schicht entstehenden martensitischen Zonen bei einer angepassten induktiven Wärmeführung nicht rissauslösend sein brauchen. Damit lässt sich die martensitische Festumwandlungszone als Stützschicht in den Schichtaufbau integrieren, wodurch in vorteilhafter Weise die Schichtdicken der auftraggeschweißten, legierten oder umgeschmolzenen Schicht geringer gewählt und dadurch die Vorschubgeschwindigkeiten zusätzlich gesteigert werden können.

In anderen Fällen, in denen die Verschleißbelastung neben der behandelten Funktionsschicht nicht gleich auf unkritische Werte sinkt, können sehr effektiv verschleißbeständige martensitische Randschichten neben den auftraggeschweißten legierten oder umgeschmolzen Schichten erzeugt werden.

Durch die erfindungsgemäße hohe Vorwärmtemperatur im Vorwärmzyklus $V_2$ wird der Bedarf an Leistung und Leistungsdichte für den nachfolgenden Prozesszyklus sehr deutlich reduziert. Davon macht der Anspruch 24 in vorteilhafter Weise Gebrauch, indem ohne die Verletzung des Erfindungsgedankens anstelle eines Lasers ein Plasmabrenner als Energiequelle für den Prozesszyklus L verwendet wird. Diese Lösung ist dann besonders vorteilhaft, wenn großflächige Beschichtungen bei reduzierten Anforderungen an die Schichtqualität und Aufmischung in betriebswirtschaftlich sehr günstiger Weise realisiert werden sollen.

Normalerweise wird der zum Legieren oder Beschichten nötige Zusatzwerkstoff als Pulver zugeführt. Die Ansprüche 25 und 26 nutzen in vorteilhafter Weise die neue Erkenntnis aus, dass bei den erfindungsgemäß erreichbaren hohen Vorschubgeschwindigkeiten Drähte bzw. Bänder viel günstiger dem Schmelzbad zugeführt werden können. Wegen der hohen Vorwärmtemperatur ist es nicht mehr nötig, den Zusatzwerkstoff durch den Laserstrahl vorzuwärmen, wie das durch das normale Einblasen des Pulvers in den Laserstrahl erreicht wird. Andererseits wird der negative Effekt vermieden, dass beim normalen Laserpulverauftragschweißen und Laseriegieren der Ausnutzungsgrad der in der Regel recht teuren pulverförmigen Zusatzwerkstoffe mit steigender Vorschubgeschwindigkeit sinkt.

Die energetisch günstige Prozessführung ergibt sich, wie in Anspruch 27 ausgeführt, wenn der Zusatzwerkstoff in schmelzflüssiger Form zugeführt wird. Diese Variante wird möglich, weil es durch die erfindungsgemäß sehr hohe Temperatur des Vorwärmzyklus $V_2$ gelingt, den Prozesszyklus L so zu führen, dass auch bei hohen Vorschubgeschwindigkeiten eine metallische Bindung der Schmelze zum Substratwerkstoff erzeugt wird und Bindefehler vermieden werden.

Die Erfindung wird an den nachfolgenden zwei Ausführungsbeispielen näher erläutert. In den dazugehörigen Zeichnungen ist die Anordnung zum induktiv unterstützten Laserauftragschweißen der Mantelflächen von verschleißbeanspruchten Wellen (Fig. 1), die erfindungsgemäße Temperaturführung zum rissfreien Laserauftragschweißen bei sehr hohen Vorschubgeschwindigkeiten (Fig. 2), ein schematischer Vergleich des erfindungsgemäßen Temperatur-Zeit-Zyklus mit denen aus dem Stand der Technik bekannten (Fig. 3) sowie die Anordnung zum induktiv unterstützten Laserauftragschweißen der Verschleißflächen von speziellen Dampferzeugerrohren (Fig. 4) dargestellt.

**Beispiel 1:**

Eine neu ausgelegte Welle kann trotz Verwendung eines sehr verschleißbeständigen Stahles und Randschichthärtung nicht der geforderten abrasiven Verschleißbelastung widerstehen. Aus Gründen der Steigerung der Lebensdauer und Verringerung der Materialkosten soll auf eine Welle aus dem Stahl 42 CrMo4 und ein partielles Laserauftragschweißen eines sehr verschleißbeständigen Beschichtungswerkstoffes übergegangen werden. Als Beschichtungswerkstoff wird ein Gemisch von 65 % Wolframschmelzkarbid (WSC) und 35 % Ni-Matrix-Werkstoff mit 14 % Cr; 3,5 % B und 2,5 % Si ausgewählt. Im optimal auftraggeschweißten Zustand besteht dieses Beschichtungssystem aus relativ grobem, kantigem, nicht umgeschmolzenen WSC mit einem mittleren Durchmesser von 70 μm, eingebettet in ein feindisperses Gefüge aus dem Matrixwerkstoff.

Aus Verschleißexperimenten ist die sehr hohe Abrasiwerschleißbeständigkeit dieses Auftragschweißwerkstoffes bekannt.

Die Welle hat einen Durchmesser von 45 mm und liegt im vergüteten Zustand vor. Es wird eine Schichtdicke nach dem Überschleifen von 0,8 mm angestrebt.

Das Laserauftragschweißen findet mit folgenden Parametern statt: Laserstrahlleistung 5,0 kW, Vorschubgeschwindigkeit 500 mm/min, Strahldefokussierung 29 mm. Es führt zu einer Raupenbreite von 5 mm bei einer Raupenhöhe von 1,2 mm. Um zu einer möglichst ebenen Oberfläche zu kommen, wird ein Spurabstand von 2,5 mm gewählt, was einem Überlappungsgrad von 50 % entspricht. Die Pulverförderrate beträgt 0,5 kg/h bei einer geschätzten Pulverausnutzung von 80 %.

Die normale Laserauftragschweißung ist nicht geeignet, dieses relativ spröde Beschichtungssystem rissfrei auf dem gewählten Vergütungsstahl aufzubringen. Es bilden sich viele Querrisse, die sich von Spur zu Spur ausbreiten und schließlich die gesamte Oberfläche durchziehen. Die Ursache der Rissbildung besteht darin, dass die Schrumpfspannungen, die während der Abkühlung in der Schicht infolge der sehr großen radialen Temperaturgradienten entstehen, infolge der geringen Duktilität des Beschichtungssystems nicht plastisch abgebaut werden können und deshalb in einem kritischen Temperaturbereich die Rissbildungsspannung überschreiten. Das Überschreiten dieser kritischen Spannung wird durch die während der Abkühlung in der Wärmeeinflusszone der Welle stattfindende Martensitbildung unterstützt, da die während der Martensitbildung in der Wärmeeinflusszone entstehenden Druckspannungen zu lateralen Dehnungen längs der Oberfläche führen, die als zusätzliche Zugspannungen auf die Beschichtung übertragen werden. Aufgabe des erfindungsgemäßen Verfahrens muss es also sein, ohne nachteilige Beeinflussung des Laserstrahlauftragschweißens die Temperaturgradienten und Temperaturänderungsgeschwindigkeiten einstellbar so weit absenken zu können, dass die kritische Rissbildungsspannung nicht mehr erreicht wird.

Ein zweiter Nachteil ist die mit dem Laserauftragschweißen verbundene geringe Vorschubgeschwindigkeit, die den Prozess unwirtschaftlich macht, da im Falle der oben erwähnten Welle die gesamte zu beschichtende Fläche im Vergleich zum Volumen des Bauteiles recht groß ist. Aufgabe des erfindungsgemäßen Verfahren ist es daher, eine energetische Arbeitsteilung derart zu realisieren, dass der Laserstrahl nur die spezifischen Funktionen des Pulveraufschmelzens und des partiellen Anschmelzens der Oberfläche der Welle zur Haftvermittlung wahrnimmt, während das viel Energie benötigende Vorwärmen bis zu der erforderlichen Tiefe durch die induktive Vorwärmquelle aufgebracht wird.

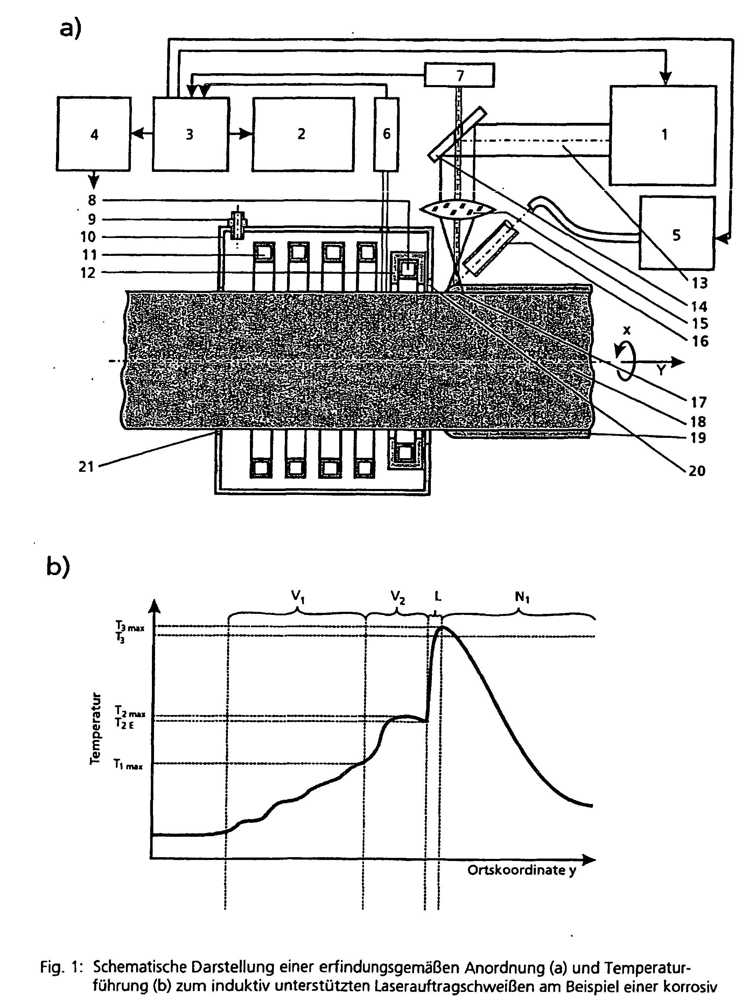

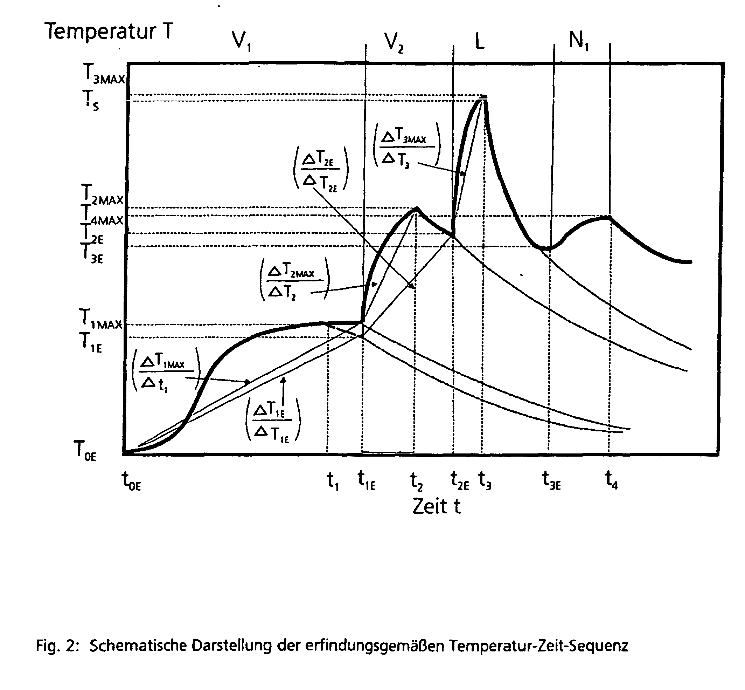

Das erfindungsgemäße Verfahren gestattet die gleichzeitige und vorteilhafte Lösung beider Aufgaben. In Fig. 1 ist schematisch die dazu realisierte erfindungsgemäße Anordnung (Fig. 1a) und die erfindungsgemäße Temperaturführung (Fig. 1 b) dargestellt. Die erfindungsgemäße Temperaturführung wird zusätzlich genauer und mit allen notwendigen Bezugzeichen versehen in Fig. 2 erläutert.

Die Welle (18) soll mit dem oben beschriebenen mehrkomponentigen Beschichtungswerkstoff beschichtet werden. Die Hauptkomponenten der Anordnung bestehen aus einem $CO_2$-Laser (1), einem Induktionsgenerator (2), einer CNC-Ansteuerung (3), einer Bewegungsmaschine (4), der Pulverfördereinrichtung (5) sowie den Induktoren (8) und (11).

Der Laserstrahl (13) wird durch den Umlenkspiegel (14) auf das Werkstück (18) gelenkt und durch das Laserstrahlformungssystem (15) fokussiert. Der Umlenkspiegel ist reflektierend für die Wellenlänge 10,6 μm des $CO_2$-Lasers und durchsichtig für den Wellenlängenbereich um 1 μm. Dadurch kann die Temperatur der Laserprozesszone (17) durch das Pyrometer (7) kontrolliert und geregelt werden.

Der Induktor $I_G$ besteht aus den beiden Induktorteilen $I_1$ (11) und $I_2$ (8), die jeweils den Vorwärmzyklus $V_1$ und $V_2$ erzeugen. Er ist ein fünfwindiger Ringinduktor, wobei die ersten 4 Windungen den Induktorteil $I_1$ (11) und die fünfte Windung den Induktorteil $I_2$ (8) bilden. Der Kopplungsabstand für das Induktorteil (11) wird zu 5 mm gewählt. Dieser Kopplungsabstand garantiert bei dem gewählten Windungsabstand von etwa 4 mm eine sanfte Einkopplung bei ausreichender Homogenität des induktiven Feldes. Um die für den Vorwärmzyklus $V_2$ nötige größere Energiedichte und die daraus folgende größere Temperaturänderungsgeschwindigkeit

$$\left(\frac{\Delta T_{2\,max}}{\Delta t_2}\right) > \left(\frac{\Delta T_{1\,max}}{\Delta t_1}\right)$$

zu erzeugen, wird für den Induktorteil $I_2$ (8) der Kopplungsabstand auf 2 mm reduziert und mit als Magnetfeldkonzentratoren wirkenden Magnetfeldverstärkungsblechen (12) umgeben. Der Abstand zwischen Laserstrahlauftreffpunkt (17) und der Berandung der Magnetfeldverstärkungsbleche beträgt 7 mm.

Der Induktor $I_G$ (8+11) ist von einer Schutzgasabdeckung (10) umgeben. Über den Schutzgaseinlass (9) wird ein Inertgas eingelassen, das mit geringer Geschwindigkeit aus den Schutzgasuslässen (20) und (21) entweicht. So ist ein ausreichender Sauerstoffabschluss gewährleistet. Über einen durchsichtigen Bereich in der Schutzgasabdeckung (10) überwacht das Pyrometer (6) mittels der CNC (3) die Maximaltemperatur $T_{1max}$ des Vorwärmzyklus $V_1$.

Die beiden Ausgangspulver werden durch den Pulverförderer (5) über die Pulverdüse (16) zur Laserprozesszone (17) gebracht. Dazu ist die Pulverförderdüse (16) schleppend unter einem Winkel von 45 ° zur Laserstrahlachse auf die Mitte der Laserprozesszone (17) gerichtet. Die Laserprozesszone (17) wird durch eine sanfte oberflächenparallele Inertgasströmung aus dem Schutzgasauslass (20) ausreichend vor Oxidation geschützt.

Fig. 2 demonstriert zur besseren Verständlichkeit die erfindungsgemäße Temperatur-Zeit-Sequenz. Es wird deutlich, wie nach einer Kurzzeitvorwärmung im Vorwärmzyklus V, die intensivere, aber noch kurzzeitigere Erwärmung im Vorwärmzyklus $V_2$ einsetzt. Durch die sehr kurzzeitige und intensive Energieeinwirkung im Vorwärmzyklus $V_2$ können bei einem minimalen Gesamtenergieeintrag, die energetischen und prozesstechnischen Bedingungen für das nachfolgende Laserauftragschweißen soweit verbessert werden, dass um eine Größenordnung höhere Vorschubgeschwindigkeiten möglich werden. Die Vorwärmung im Vorwärmzyklus V, dagegen dauert etwas länger, reicht weiter in die Tiefe und bewirkt dadurch im wesentlichen die nötige Absenkung des Temperaturgradienten zur Rissvermeidung. Wenn die Temperatur während der Abkühlung in der Beschichtung und in der umgebenden Wärmeeinflusszone des Bauteils den kritischen Bereich erreicht, sind die viel instationäreren und mit größeren Temperaturgradienten versehenen Temperaturfelder des Vorwärmzyklus $V_2$ und des Laserprozesszyklus $L_1$ schon so weit abgeflacht, dass sie keine wesentliche Erhöhung des Temperaturgradienten des aus dem Vorwärmzyklus $V_1$ resultierenden Temperaturfeldes mehr bewirken. Bei Bedarf kann, wie oben beschrieben, noch ein zusätzlicher Nachwärmzyklus $N_1$ angeschlossen werden. Diese Temperaturführung stellt ein Optimum zwischen den teilweise verschiedene Optimierungsstrategien erfordernden Zielfunktionen minimale Wärmebelastung des Bauteiles einerseits, sowie Rissvermeidung und höchste Bearbeitungsgeschwindigkeit andererseits dar.

Zur Durchführung des Verfahrens wird nach dem Einspannen der Welle (18) in die Bewegungsmaschine (4) erstere in eine Umdrehungsgeschwindigkeit von $v_x$ = 4000 mm/min und eine Vorschubgeschwindigkeit von $v_y$ = 70 mm/min versetzt. Das entspricht einer Bahngeschwindigkeit von $v_B = \sqrt{v_x^2 + v_y^2}$ = 4000,6 mm/min. Der Laser (1) wird auf eine Laserleistung von 5,0 kW eingestellt. Der Strahldurchmesser im Laserstrahlauftreffpunkt wird durch Verfahren des Laserstrahlformungssystems (15) in z-Richtung auf einen Wert von 5,5 mm festgelegt. Am Induktionsgenerator (2) wird eine Frequenz von etwa 20 kHz eingerichtet und eine induktive Leistung von 30 kW vorgewählt. Im Gegensatz zu Yoshiwara und Kawanami ist die induktive Leistung damit um ein Vielfaches größer als die Laserleistung. Gleichzeitig mit dem Start des Bewegungsprogramms wird der Induktionsgenerator angeschaltet. Am Ende des Vorwärmzyklus $V_1$ wird eine Temperatur $T_{1max}$ von 620 °C erreicht. Die sich am Ende des Vorwärmzyklus $V_2$ ergebende Temperatur $T_{2max}$ beträgt 1010 °C. Nachdem der erste so erwärmte Werkstoffbereich die Position des Laserstrahlauftreffpunktes (17) erreicht hat, wird der Laser zugeschaltet. Zur Vermeidung von Beschichtungsfehlern infolge der Trägheit der Pulverförderung wird der Pulverförderer (5) CNC-gesteuert 6 s vor Zuschaltung des Lasers (1) in Betrieb gesetzt. Die Pulverförderrate beträgt 6,0 kg/h. Die geschätzte Pulverausnutzung beträgt 75 %. Die Abkühlung erfolgt bei diesem Bauteil und Werkstoff an Luft ohne zusätzliche Maßnahmen zur induktiven Nachwärmung oder beschleunigten Abkühlung in unkritischen Temperaturbereichen.

Nach dem Abkühlen ist die auftraggeschweißte Schicht und die Welle frei von Rissen. Das Gefüge und die erreichte Härte sind vergleichbar zu den ohne Vorwärmen erreichten Zuständen. Im Vergleich zum konventionellen Laserauftragschweißen wird die Vorschubgeschwindigkeit $v_B$ um den Faktor 8 (von 500 mm/min auf 4000 mm/min), die Flächenleistung um den Faktor 8 (von 0,075 m²/h auf 0,6 m²/h) und die Auftragrate um den Faktor 11 (von 0,4 kg/h auf 4,5 kg/h) gesteigert.

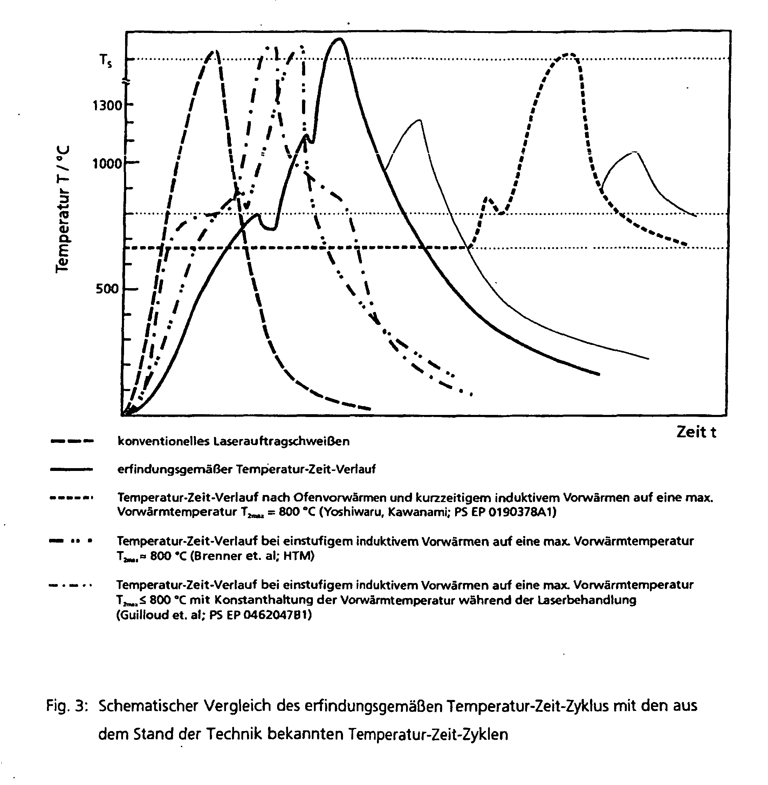

In Fig. 3 wird das erfindungsgemäße Verfahren mit dem Stand der Technik verglichen: Das konventionelle Laserauftragschweißen [strichlierter Linienzug in Fig. 3] weist eine sehr rasche Temperaturänderung bis zum Erreichen der Schmelztemperatur $T_s$, eine durch die nur mögliche geringe Vorschubgeschwindigkeit vergleichsweise lange Laserstrahleinwirkung und eine rasche Temperaturänderung während der Abkühlung über den gesamten Temperaturbereich zwischen Schmelztemperatur $T_s$ und etwa 100 °C auf. Die erreichbaren Vorschubgeschwindigkeiten sind wegen des großen Energiebedarfes und wegen der notwendigen Absenkung der Abkühlgeschwindigkeit zur Verringerung der Rissgefahr sehr gering. Deshalb können zudem nur relativ duktile, rissempfindliche Beschichtungswerkstoffe appliziert werden.

Dem gegenüber weisen die drei bisher bekannt gewordenen Varianten des induktiv unterstützten Laserauftragschweißens die Möglichkeit auf, die Abkühlgeschwindigkeit ohne wesentliche, prozessverschlechternde Eingriffe in die Laserbehandlungsparameter zu verringern.

Wird das Vorwärmen der gesamten Funktionsfläche vollständig vor dem Beginn des Laserauftragschweißens durchgeführt und die Vorwärmtemperatur während des Laserauftragschweißens durch verminderte Energiezufuhr konstant gehalten (strichpunktierter Linienzug in Fig. 3, [Guilloud, R. et. al. EP 0462 047B1]) kann in kritischen Temperaturbereichen eine wesentliche Absenkung der Temperaturänderungsgeschwindigkeit und damit eine effektive Rissvermeidung erreicht werden. Allerdings wird bei großen Funktionsflächen die Wärmebelastung des Bauteiles zu groß. Weiterhin ist die Vorwärmtemperatur wegen der relativ langen Haltezeiten beschränkt, weshalb keine entscheidend höheren Vorschubgeschwindigkeiten erreicht werden können.

Von Yoshiwara und Kawanami ([EP 0190378A1], punktierter Linienzug in Fig. 3) wurde ein Laserauftragschweißen nach langdauernder, durchgreifender konventioneller Ofenvorwärmung gefolgt von einer kurzzeitigen induktiven Vorwärmung vorgestellt. Hier findet die konventionelle Ofenvorwärmung notwendigerweise komplett vor dem Start des Laserauftragschweißens statt, während die aufgesetzte induktive Kurzzeitvorwärmung im Vorlauf des Laserstrahles erfolgt. Hinsichtlich der Rissvermeidung liegen dadurch günstigere Bedingungen vor, hinsichtlich der Wärmebelastung des Bauteiles, der Verzugs- und Verzunderungsgefahr und eventueller notwendiger mechanischer Nachbehandlungen ist das Verfahren aber deutlich ungünstiger als die von Guilloud et al. realisierte Variante.

Das induktive Vorwärmen kann auch vollständig einstufig im Vorlauf erfolgen ([Brenner, B. et al., Härterei-Technische Mitteilungen, 52 (1997) Nr. 4, Seiten 221-225], Strich-Punkt-Punkt-Linienzug in Fig.3). Dadurch wird die Verweilzeit bei hoher Temperatur kürzer, die Maximaltemperatur des Vorwärmzyklus kann gesteigert werden und trotzdem sind ausrechend niedrige Abkühlgeschwindigkeiten zur Vermeidung der Rissbildung erreichbar. Mit dieser Variante sind im Vergleich zu den beiden anderen Verfahren der induktiven Vorwärmung schon deutlich höhere Vorschubgeschwindigkeiten bei verringertem Wärmeeintrag und ausreichender Rissvermeidung erreicht worden.

Das erfindungsgemäße Verfahren (durchgezogene Linie in Fig. 3) verwendet dagegen zwei aufeinander abgestimmte induktive Kurzzeit-Erwärmungszyklen, die beide, vielfach ohne Einbuße an Taktzeit, im Vorlauf erfolgen können. Der erste Vorwärmzyklus ist in seiner Zeitdauer, Maximaltemperatur, Einwirkfläche, Einwirktiefe und Einwirkdauer so abgestimmt, dass die Abkühlgeschwindigkeit auf den für die Rissvermeidung im konkreten Anwendungsfall notwenigen Wert gesenkt werden kann. Der zweite, auf jeden Fall im Vorlauf realisierte Vorwärmzyklus sichert dagegen nur eine sehr kurzzeitige Erwärmung um den oberflächennahen Bereich (ohne wesentliche Wärmeableitung in die Tiefe) auf sehr hohe, bisher nicht praktikable Erwärmungstemperaturen. Damit sind dann bisher nicht erreichbar hohe Vorschubgeschwindigkeiten möglich.

Ohne Verletzung des Erfindungsgedankens kann anstelle des Laserstrahles als Quelle der hochenergetischen Energieeinwirkung zur Erzeugung des Prozesszyklus L auch ein Plasmabrenner verwendet werden.

**Beispiel 2:**

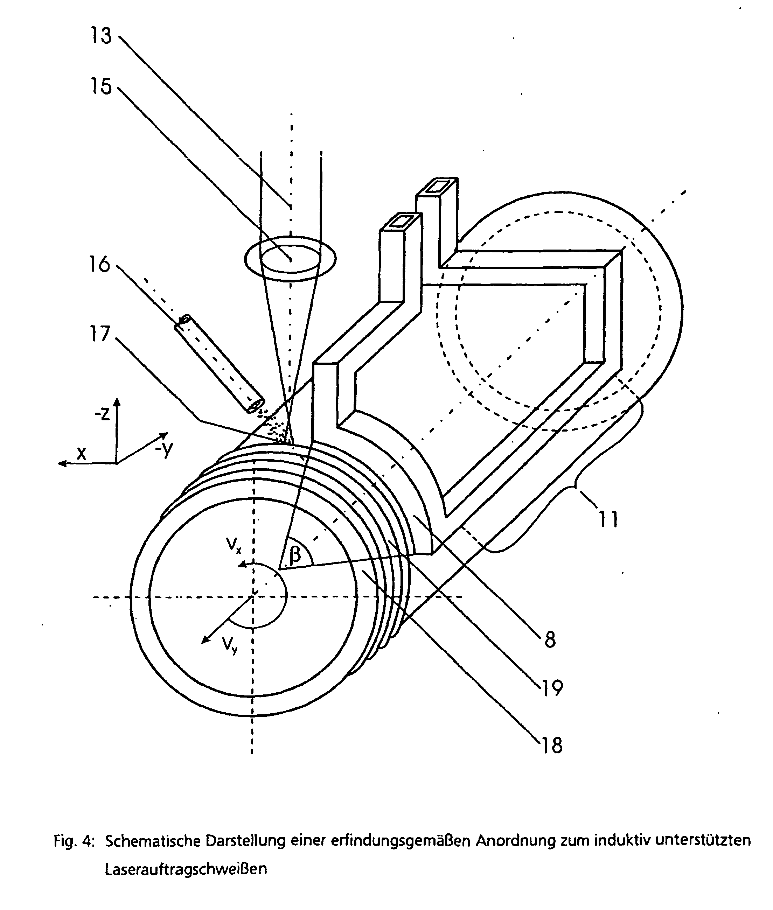

Ein Dampferzeugerrohr (siehe (18) in Fig. 4) soll in einer korrosiven Umgebung eingesetzt werden. Da es unwirtschaftlich ist, das ganze Rohr aus einem teuren korrosionsbeständigen Werkstoff zu fertigen, soll es aus dem kostengünstigen Baustahl St52-3 gefertigt werden und durch ein Auftragschweißverfahren mit dem Werkstoff NiCr21Mo9Nb geschützt werden. Die konventionellen Auftragschweißverfahren tragen wegen der geringen Vorschubgeschwindigkeit zuviel und undefiniert Wärme ein, so dass es schwierig ist, die Aufmischung auf dem erforderlichen geringen Maß zu halten. Das Laserauftragschweißen dagegen ist wegen der zu geringen Vorschubgeschwindigkeit unwirtschaftlich.

Zur Lösung wird eine spezielle Ausbildung der erfindungsgemäßen Anordnung verwendet, die sich durch besondere Einfachheit auszeichnet (siehe Fig. 4). Die induktive Vorwärmung wird durch einen Induktor $I_{12b}$ realisiert, der die beiden Induktoräste (11) und (8) enthält, die die beiden Induktoren $I_1$ und $I_2$ bilden. Während der Induktor $I_1$ (11) in der Richtung $\vec{y}$ des Längsvorschubes des Rohres angeordnet ist, erstreckt sich der Induktor $I_2$ (8) parallel zu der Längsrichtung der Auftragschweißraupen. Das bedeutet, dass sich der Induktorast $I_2$ in Richtung $\vec{b}$ der Bahngeschwindigkeit $v_B = \sqrt{v_x^2 + v_y^2}$ erstreckt und somit $\alpha = 0°$ ergibt. Der Induktor $I_{12b}$ ist durchgehend aus einem Cu-Rohr mit einem Querschnitt von 8 x 8 mm² gefertigt. Der Umschlingungswinkel $\beta$ beträgt 80°. Bei einem Rohraußendurchmesser von 40 mm, einer Rohrwandstärke von 4 mm beträgt der Innendurchmesser des Induktorastes $I_2$ (8) 46 mm, der Kopplungsabstand beträgt somit 3 mm. Der Induktor $I_{12b}$ wird in y-Richtung so positioniert, dass die Mitte des Induktorastes $I_2$ (8) um 2 mm gegenüber der Projektion des Laserstrahles auf den Rohrumfang in Richtung y verschoben ist. Der Induktorast $I_1$ (11) ist etwa $k_y$ = 40 mm lang. Das Pulver wird stechend zugeführt, wobei die Pulverförderdüse in den Laserstrahlauftreffpunkt $L_p$ (17) gerichtet ist. Um die Einkopplung der induktiven Energie zu verbessern, sind beide Induktoräste mit Magnetverstärkungsblechen versehen. Der Induktorast $I_2$ (8) ist mit einer Schutzgasabdeckung versehen (beides in Fig. 4 aus Gründen der Übersichtlichkeit weggelassen).

Durch diese Anordnung der beiden Induktoräste und der Schutzgasabdeckung wird einerseits eine relativ sanfte Vorwärmung innerhalb des Vorwärmzyklus V, realisiert und andererseits eine sehr hohe Spitzentemperatur $T_{2max}$ des Vorwärmzyklus $V_2$ ohne störende Verzunderung erzielt. Die erreichbare Vorschubgeschwindigkeit ist um den Faktor 10 größer als beim konventionellen Laserauftragschweißen.

In prinzipiell gleicher Art und Weise können mit dieser geschilderten Anordnung auch andere rohrförmige Produkte, wie z. B. Rohre für geologische Erkundungen, Ölbohrgestänge, Hydraulikzylinder und Pumpenzylinder beschichtet werden.

**Zusammenstellung der verwendeten Abkürzungen:**

| | |
|---|---|
| $V_1$ | Vorwärmzyklus 1 |
| $V_2$ | Vorwärmzyklus 2 |
| L | Laserprozesszyklus |
| N, | Nachwärmzyklus 1 |
| $T_{1max}$ | Maximaltemperatur des Vorwärmzyklus 1 |
| $T_{2max}$ | Maximaltemperatur des Vorwärmzyklus 2 |
| $T_{3max}$ | Maximaltemperatur des Laserprozesszyklus $L_1$ |
| $T_S$ | Schmelztemperatur |
| $T_{4max}$ | Maximaltemperatur des Nachwärmzyklus N, |
| $T_{1E}$ | Temperatur am Ende des Vorwärmzyklus V, |
| $T_{2E}$ | Temperatur am Ende des Vorwärmzyklus $V_2$ |
| $\Delta T_{1max}$ | maximale Temperaturerhöhung im Vorwärmzyklus $V_1$ |
| $\Delta T_{2max}$ | maximale Temperaturerhöhung im Vorwärmzyklus $V_2$ |
| $\Delta T_{3max}$ | maximale Temperaturerhöhung während des Laserprozesszyklus |
| $\Delta T_{1n}{}^*$ | pulsierende Temperaturzunahme im Vorwärmzyklus $V_1$ |
| $\Delta T_2{}^*$ | pulsierende Temperaturzunahme im Vorwärmzyklus $V_2$ |
| $T_\gamma$ | Austenitisierungstemperatur |
| $T_{MS}$ | Martensitstarttemperatur |
| $t_1$ | Zeit des Ausschaltens der Energiezufuhr im Vorwärmzyklus $V_1$ |
| $t_2$ | Zeit des Ausschaltens der Energiezufuhr im Vorwärmzyklus $V_2$ |
| $t_3$ | Zeit der Beendigung der Laserstrahleinwirkung im Laserprozesszyklus L |
| $t_4$ | Zeit am Ende des Nachwärmzyklus $N_1$ |
| $t_{1E}$ | Zeit am Ende des Vorwärmzyklus $V_1$ |
| $t_{2E}$ | Zeit am Ende des Vorwärmzyklus $V_2$ |
| $t_{3E}$ | Zeit nach Beendigung des Laserprozesszyklus L |
| $\Delta t_1$ | Wärmeeinwirkzeit während Vorwärmzyklus $V_1$ |
| $\Delta t_2$ | Wärmeeinwirkzeit während Vorwärmzyklus $V_2$ |
| $\Delta t_3$ | Wärmeeinwirkzeit während des Laserprozesszyklus L |
| $Z_1$ | Wärmeeindringtiefe während Vorwärmzyklus $V_1$ |
| $Z_2$ | Wärmeeindringtiefe während Vorwärmzyklus $V_2$ |
| $I_1$ | Induktorteil 1 |
| $I_2$ | Induktorteil 2 |
| $I_3$ | Induktor zum Erzeugen des Nachwärmzyklus |
| $I_G$ | Kombinationsinduktor zur gleichzeitigen Erzeugung der Vorwärmzyklen $V_1$ und $V_2$ (bestehend aus $I_1$ und $I_2$) |
| $I_{12a}$ | Induktor zur gleichzeitigen Erzeugung beider Vorwärmzyklen durch schnelle Relativbewegungen zwischen Induktor und Werkstück |
| $I_{12b}$ | speziell geformter Induktor zum gleichzeitigen Erzeugen beider Vor- |

| | |
|---|---|
| | wärmzyklen $V_1$ und $V_2$ |
| $I_{123}$ | Kombinationsinduktor zur gleichzeitigen Erzeugung der Vorwärmzyklen $V_1$, $V_2$ und des Nachwärmzyklus $N_1$ |
| $p_1$ | Wärmeflussdichte des 1. Vorwärmzyklus |
| $p_2$ | Wärmeflussdichte des 2. Vorwärmzyklus |
| $F_{I1}$ | Wirkfläche des Induktors $I_1$ |
| $F_{I2}$ | Wirkfläche des Induktors $I_2$ |
| $L_p$ | Laserstrahlauftreffpunkt, Laserprozesszone |
| $f_1$ | Frequenz Induktor 1 |
| $f_2$ | Frequenz Induktor 2 |
| n | Nummer des Pulses im pulsierenden Vorwärmzyklus $V_1$ |
| m | Faktor |
| $k_y$ | Länge der Induktorwirkfläche des Induktorastes $I_1$ des Induktors $I_{12b}$ |
| $k_x$ | Länge der Induktorwirkfläche des Induktorastes $I_2$ des Induktors $I_{12b}$ |
| $k_{1x}$ | Ausdehnung des Induktorastes $I_1$ des Induktors $I_{12b}$ in x-Richtung |
| $k_{2x}$ | Ausdehnung des Induktorastes $I_2$ des Induktors $I_{12b}$ in x-Richtung |
| $v_B$ | Bahngeschwindigkeit des Bauteiles |
| $v_x$ | Vorschubgeschwindigkeit in x-Richtung |
| $v_y$ | Vorschubgeschwindigkeit in y-Richtung |
| $v_{Bl}$ | Vorschubgeschwindigkeit des Induktors |
| y | Koordinatenachse |
| x | Koordinatenachse, Induktorlängsachse des Induktors $I_{12b}$ |
| $\alpha$ | Winkel zwischen der Induktorlängsachse des Induktors $I_{12b}$ und der Richtung der Bahngeschwindigkeit |
| $\beta$ | Umschlingungswinkel des rotationssymmetrischen Werkstückes |
| a | Spurabstand |
| $\vec{b}$ | Richtung der Bahngeschwindigkeit |
| r | Radius des rotationssymmetrischen Werkstückes |
| $d_o$ | Zulässige Schichtdicke der Oxidhaut des Werkstückes |
| $\vec{r}$ | Ortsvektor des Temperaturfeldes |

**Zusammenstellung der Bezugszeichen aus Fig.1 bzw. Fig. 4:**

| | |
|---|---|
| 1 | Laser |
| 2 | Induktionsgenerator |
| 3 | CNC |
| 4 | Bewegungsmaschine |
| 5 | Pulverförderer |

| | |
|---|---|
| 6 | Pyrometer zur Überwachung und Regelung der induktiven Vorwärmung |
| 7 | Pyrometer zur Überwachung und Regelung des Beschichtungsprozesses |
| 8 | Induktorteil $I_2$ zur Realisierung des Vorwärmzyklus $V_2$ |
| 9 | Stutzen für Schutzgas-Einlass |
| 10 | Schutzgasabdeckung |
| 11 | Induktorteil $I_1$ zur Realisierung des Vorwärmzyklus $V_1$ |
| 12 | Magnetfeldverstärkungsblech des Induktorteiles $I_2$ |
| 13 | Laserstrahl |
| 14 | Umlenkspiegel für Laserstrahl |
| 15 | Laserstrahlformungssystem |
| 16 | Pulverförderdüse |
| 17 | Laserprozesszone und Laserstrahlauftreffpunkt Lp |
| 18 | Werkstück |
| 19 | auftraggeschweißte Naht |
| 20 | Schutzgasauslass |
| 21 | Schutzgasauslass |

**Patentansprüche**

1. Verfahren zur Erzeugung von verschleißbeständigen Randschichten mittels induktiv unterstützter Laserstrahlbehandlung auf induktiv erwärmbaren Werkstücken **dadurch gekennzeichnet, dass**

   a) die induktive Vorwärmung in zwei zeitlich unmittelbar nacheinander ablaufenden Vorwärmzyklen $V_1$ und $V_2$ erfolgt,

   b) die durch die beiden Vorwärmzyklen $V_1$ und $V_2$ erzeugten Temperaturfelder inhomogen und instationär sind,

   c) die effektive Wärmeflussdichte p, des ersten Vorwärmzyklus $V_1$ geringer ist als die Wärmeflussdichte $p_2$ des zweiten Vorwärmzyklus $V_2$

   d) der Vorwärmzyklus $V_1$ eine Maximaltemperatur $T_{1max}$ in Relation zur Schmelztemperatur $T_s$ des Grundwerkstoffes des Bauteiles von $0{,}2 \leq \dfrac{T_{1max}[^\circ C]}{T_s[^\circ C]} \leq 0{,}6$ aufweist,

   e) die Maximaltemperatur $T_{2max}$ des Vorwärmzyklus $V_2$ innerhalb des Temperaturintervalls

   $$0{,}3 \leq \frac{T_{2max}[^\circ C]}{T_s[^\circ C]} \leq \frac{T_s[^\circ C]\text{-}50\,K}{T_s[^\circ C]}$$

   liegt,

   f) für die Maximaltemperatur $T_{3max}$ des Laser-

prozesszyklus L die Relation $T_{3max} > T_s$ gilt und

g) für die Beziehungen zwischen den beiden Vorwärmzyklen $V_1$ und $V_2$ die folgenden Relationen gelten:

$$T_{2max} \geq T_{1max} + 50 \text{ K};$$

$$\left(\frac{\Delta T_{1max}}{\Delta t_1}\right) < \left(\frac{\Delta T_{2max}}{\Delta t_2}\right);$$

$$\Delta t_1 \geq m * \Delta t_2 \text{ mit } 1,5 \leq m \leq 30$$

$$z_1 \geq 1,5 * z_2$$

wobei $\Delta T_{1max}$ und $\Delta T_{2max}$ die Temperaturzunahmen, $\Delta t_1$ und $\Delta t_2$ die Wärmeeinwirkzeiten und $z_1$ und $z_2$ die Wärmeeindringtiefen während der Vorwärmzyklen $V_1$ und $V_2$ bedeuten.

2. Verfahren nach Anspruch 1, **dadurch gekennzeichnet, dass** die beiden Vorwärmzyklen $V_1$ und $V_2$ mit zwei verschiedenen, relativ zueinander und relativ zum Laserstrahlauftreffpunkt $L_p$ fest angeordneten Induktoren $I_1$ und $I_2$ erzeugt werden, wobei die Wärmeflussdichte $p_1$ des Induktors $I_1$ kleiner und die Wärmeeinwirkzeit $\Delta t_1$ und die Wirkfläche $F_{I1}$ des Induktors $I_1$ größer als die entsprechenden Werte des Induktors $I_2$ sind.

3. Verfahren nach Anspruch 2, **dadurch gekennzeichnet, dass** die beiden Induktoren $I_1$ und $I_2$ mit unterschiedlichen Frequenzen betrieben werden, wobei gilt $f_1 < f_2$.

4. Verfahren nach Anspruch 3, **dadurch gekennzeichnet, dass** der Induktor $I_1$ mit Mittelfrequenz und der Induktor $I_2$ mit Hochfrequenz betrieben wird.

5. Verfahren nach Anspruch 2, **dadurch gekennzeichnet, dass** die beiden Induktoren $I_1$ und $I_2$ körperlich in einem Induktor $I_G$ vereinigt sind und die größere effektive Wärmeflussdichte $p_2$ des Induktors $I_2$ bei gleichzeitig geringerer Wärmeeinwirkzeit $\Delta t_2$ und geringerer Wirkfläche $F_{I2}$ durch eine erhöhte induktive Feldkonzentration von kleineren, dem Laserstrahlauftreffpunkt $L_p$ zugewandten Bereichen des Induktors $I_G$ erreicht wird.

6. Verfahren nach Anspruch 5, **dadurch gekennzeichnet, dass** die erhöhte induktive Feldkonzentration durch Magnetfeldverstärkungselemente, einen anderen Induktorquerschnitt oder einen engeren Windungsabstand erreicht wird.

7. Verfahren nach Anspruch 1, **dadurch gekennzeichnet, dass** die beiden Vorwärmzyklen $V_1$ und $V_2$ mit einem einzigen Induktor $I_{12a}$ erzeugt werden, indem der Induktor $I_{12a}$ ausreichend schnell relativ zum Laserstrahlauftreffpunkt $L_p$ hin und her bewegt wird, beide Vorwärmzonen der Vorwärmzyklen $V_1$ und $V_2$ überstreicht und die höhere Wärmeflussdichte $p_2$ des Vorwärmzyklus $V_2$ dadurch erreicht wird, dass in diesem Gebiet die Vorschubgeschwindigkeit $v_{Bi}$ des Induktors kleiner ist als in dem Gebiet, das dem Vorwärmzyklus $V_1$ unterworfen wird.

8. Verfahren nach mindestens einem der Ansprüche 1 bis 7, **dadurch gekennzeichnet, dass** die Maximaltemperaturen $T_{1max}$ und $T_{2max}$ der Vorwärmzyklen $V_1$ und $V_2$ durch pulsierende Temperaturzunahmen $\Delta T_1^*{}_n$ und $\Delta T_2^*$ erreicht werden, wobei der Vorwärmzyklus $V_1$ aus bis zu $n \leq 50$ Temperaturzyklen $T_1^*{}_n$ und der Vorwärmzyklus $V_2$ aus maximal einem Temperaturzyklus $T_2^*$ besteht und zwischen den Temperaturzunahmen $\Delta T_1^*{}_n$ und $\Delta T_2^*$ die Relation

$$\Delta T_1^*{}_n << \Delta T_2^* \text{ gilt.}$$

9. Verfahren nach Anspruch 8, **dadurch gekennzeichnet, dass** die pulsierenden Temperaturzunahmen $\Delta T_1^*{}_n$ und $\Delta T_2^*$ durch einen einzigen Induktor $I_{12b}$ erzeugt werden, die Längsachsen k, und $k_2$ der beiden Induktoräste $I_1$ und $I_2$ sich parallel oder nahezu parallel zu den Richtungen $\vec{y}$ und $\vec{x}$ erstrecken, wobei für die Ausdehnung der beiden Induktoräste $I_1$ und $I_2$ in $\vec{x}$-Richtung $k_{1x}$ und $k_{2x}$ gilt $k_{1x} << k_{2x}$, der Laserstrahlauftreffpunkt $L_p$ sich in konstantem Abstand hinter dem Induktorast $I_2$ in der Induktorlängsachse befindet, der Induktor $I_{12b}$ relativ zum Werkstück mit einer durch den Laserprozess vorgegebenen Bahngeschwindigkeit $v_B$ in eine Richtung $\vec{b}$ bewegt wird, die einen Winkel $\alpha$ zur Induktorlängsachse $\vec{k}_x$ des Induktorastes $I_2$ einschließt und dabei folgende Relationen eingehalten werden:

$$0° \leq \alpha \leq 9°$$

$$v_y = V_B * \sin \alpha$$

$$v_x = v_y * \cot \alpha >> v_y$$

($v_y$ - Vorschubgeschwindigkeit in y-Richtung, $v_x$ - Vorschubgeschwindigkeit in x-Richtung)

**10.** Verfahren nach Anspruch 9, **dadurch gekennzeichnet, dass** die Behandlung von großen rotationssymmetrischen Werkstücken mit dem Radius r in spiralförmigen Bahnen mit dem Spurabstand a erfolgt, der Winkel $\alpha$ zwischen der Induktorlängsachse $\vec{x}$ des Induktors $I_{2b}$ und der Richtung $\vec{b}$ der Bahngeschwindigkeit $v_B$ auf den Wert

$$\alpha = \arctan\left(\frac{a}{2\pi r}\right)$$

festgelegt wird und der Umschlingungswinkel $\beta$ des rotationssymmetrischen Werkstückes durch den Induktor $I_{12b}$ $10° \leq \beta \leq 180°$ beträgt.

**11.** Verfahren nach Anspruch 9, **dadurch gekennzeichnet, dass** die Behandlung von großen ebenen Werkstückoberflächen in ebenen, parallelen Bahnen erfolgt und der Winkel $\alpha$ den Wert $\alpha = 0$ aufweist.

**12.** Verfahren nach mindestens einem der Ansprüche von 1 bis 11, **dadurch gekennzeichnet, dass** die Maximaltemperaturen $T_{1max}$ des Vorwärmzyklus $V_1$ erst unmittelbar am Start des Vorwärmzyklus $V_2$ erreicht wird.

**13.** Verfahren nach mindestens einem der Ansprüche von 1 bis 12, **dadurch gekennzeichnet, dass** nur der Vorwärmzyklus <u>1</u> induktiv erzeugt wird und der Vorwärmzyklus <u>2</u> durch Einwirkung eines oder mehrerer Hochleistungsdiodenlaser entsteht.

**14.** Verfahren nach mindestens einem der Ansprüche von 1 bis 13, **dadurch gekennzeichnet, dass** die Gasabschirmung während des Vorwärmzyklus $V_1$ oder während der Vorwärmzyklen $V_1$ und $V_2$ so gewählt wird, dass eine Oxidation des Werkstückes bis zu einer Schichtdicke $d_0$ von $d_0 < 0,5\mu m$ auftritt.

**15.** Verfahren nach Anspruch 14, **dadurch gekennzeichnet, dass** eine weitergehende Oxidation des Werkstückes während des Vorwärmzyklus <u>$V_2$</u> durch eine vorwiegend auf die Vorwärmzone des Vorwärmzyklus <u>$V_2$</u> wirkende Inertgasabdeckung vermieden wird.

**16.** Verfahren nach mindestens einem der Ansprüche von 1 bis 15, **dadurch gekennzeichnet, dass** das Laserbehandlungsverfahren des Laserprozesszyklus L ein Auftragschweißen darstellt.

**17.** Verfahren nach mindestens einem der Ansprüche von 1 bis 15, **dadurch gekennzeichnet, dass** das Laserbehandlungsverfahren des Laserprozesszyklus L ein Laserlegieren oder Lasergaslegieren ist.

**18.** Verfahren nach mindestens einem der Ansprüche von 1 bis 15, **dadurch gekennzeichnet, dass** als das Laserbehandlungsverfahren des Laserprozesszyklus L ein Umschmelzen der Randschicht verwendet wird.

**19.** Verfahren nach mindestens einem der Ansprüche von 1 bis 15, **dadurch gekennzeichnet, dass** als Laserbehandlungsverfahren des Laserprozesszyklus L ein Lötprozess gewählt wird.

**20.** Verfahren nach mindestens einem der Ansprüche von 1 bis 19, **dadurch gekennzeichnet, dass** bei sehr rissempfindlichen Werkstoffen zusätzlich ein Nachwärmzyklus angeschlossen wird und die Maximaltemperatur $T_{4max}$ des Nachwärmzyklus $N_1$ in einem Temperaturbereich

$$0,25 \leq \frac{T_{4max}[°C]}{T_s[°C]} \leq 0,8 \text{ liegt.}$$

**21.** Verfahren nach Anspruch 19, **dadurch gekennzeichnet, dass** der Nachwärmzyklus auch induktiv erzeugt wird.

**22.** Verfahren nach Anspruch 20, **dadurch gekennzeichnet, dass** die Induktoren $I_1$ und $I_2$ zum Erzeugen der Vorwärmzyklen $V_1$ und $V_2$ mit dem Induktor $I_3$ zum Erzeugen des Nachwärmzyklus $N_1$ zu einem Induktor $I_{123}$ vereinigt sind.

**23.** Verfahren nach mindestens einem der Ansprüche von 1 bis 22, **dadurch gekennzeichnet, dass** beim Behandeln von härtbaren Stählen oder Gusseisen die Temperatur $T_{2max}$ des Vorwärmzyklus $V_2$ größer ist als die Austenitisierungstemperatur $T\gamma$ und dass nach Beendigung des entsprechenden Laserprozesszyklus L die Abkühlung ab einer Temperatur $T \approx M_s$ so beschleunigt erfolgt, dass zumindest unterhalb und neben der durch den Laser auf Temperatur $T_{3max} > T_s$ erwärmten Schicht eine martensitische Umwandlung erfolgt.

**24.** Verfahren nach mindestens einem der Ansprüche von 1 bis 23, **dadurch gekennzeichnet, dass** anstelle eines Lasers als hochkonzentrierte Energiequelle für die Randschichtveredlung mit energiereicher Strahlung ein Plasmabrenner verwendet wird.

**25.** Verfahren nach mindestens einem der Ansprüche 16, 17 oder 19, **dadurch gekennzeichnet, dass** der Zusatzwerkstoff als Draht zugeführt wird.

**26.** Verfahren nach mindestens einem der Ansprüche 16, 17 oder 19, **dadurch gekennzeichnet, dass** der Zusatzwerkstoff als Band zugeführt wird.

**27.** Verfahren nach, mindestens einem der Ansprüche 16, 17 oder 19, **dadurch gekennzeichnet, dass** der Zusatzwerkstoff in schmelzflüssiger Form zugeführt wird.

**Claims**

**1.** Method for making wear-resistant surface layers by means of inductively boosted laser beam treatment on inductively heatable workpieces, **characterized in that**

(a) the inductive preheating is carried out in two preheat cycles $V_1$ and $V_2$ which immediately follow one another in terms of time,

(b) the temperature fields generated by the two preheat cycles $V_1$ and $V_2$ are neither homogeneous nor steady,

(c) the effective heat flux density $p_1$ of the first preheat cycle $V_1$ is lower than the heat flux density $p_2$ of the second preheat cycle $V_2$,

(d) the preheat cycle $V_1$ has a maximum temperature $T_{1max}$ in relation to the melting point $T_s$ of the base material of the component of

$$0.2 \leq \frac{T_{1max}[^\circ C]}{T_s[^\circ C]} \leq 0.6,$$

(e) the maximum temperature $T_{2max}$ of the preheat cycle $V_2$ is within the temperature range

$$0.3 \leq \frac{T_{2max}[^\circ C]}{T_s[^\circ C]} \leq \frac{T_s[^\circ C]\text{-}50\,K}{T_s[^\circ C]},$$

(f) the relationship $T_{3max} > T_s$ applies to the maximum temperature $T_{3max}$ of the laser process cycle L, and

(g) the following relationships apply for the relationships between the two preheat cycles $V_1$ and $V_2$:

$$T_{2max} \geq T_{1max} + 50\,K;$$

$$\left(\frac{\Delta \dot{T}_{1max}}{\Delta t_1}\right) < \left(\frac{\Delta T_{2max}}{\Delta t_2}\right);$$

$$\Delta t_1 \geq m * \Delta t_2 \text{ with } 1.5 \leq m \leq 30$$

$$z_1 \geq 1.5 * z_2$$

where $\Delta T_{1max}$ and $\Delta T_{2max}$ denote the temperature increases, $\Delta t_1$ and $\Delta t_2$ denote the heat action times and $z_1$ and $z_2$ denote the heat penetration depths during the preheat cycles $V_1$ and $V_2$.

**2.** Method according to Claim 1, **characterized in that** the two preheat cycles $V_1$ and $V_2$ are generated using two different inductors $I_1$ and $I_2$ which are arranged fixedly with respect to one another and with respect to the laser beam impingement point Lp, the heat flux density $p_1$ of the inductor $I_1$ being lower and the heat action time $\Delta t_1$ and the active area $F_{I1}$ of the inductor $I_1$ being greater than the corresponding values for the inductor $I_2$.

**3.** Method according to Claim 2, **characterized in that** the two inductors $I_1$ and $I_2$ are operated at different frequencies, where $f_1 < f_2$.

**4.** Method according to Claim 3, **characterized in that** the inductor $I_1$ is operated at medium frequency and the inductor $I_2$ is operated at high frequency.

**5.** Method according to Claim 2, **characterized in that** the two inductors $I_1$ and $I_2$ are physically combined in a single inductor $I_G$, and the higher effective heat flux density $p_2$ of the inductor $I_2$ combined, at the same time, with a shorter heat action time $\Delta t_2$ and a smaller active area $F_{I2}$, is achieved by an increased inductive field concentration of smaller regions of the inductor $I_G$ facing the laser beam impingement point $L_p$.

**6.** Method according to Claim 5, **characterized in that** the increased inductive field concentration is achieved by magnetic-field amplification elements, a different inductor cross section or a tighter winding spacing.

**7.** Method according to Claim 1, **characterized in that** the two preheat cycles $V_1$ and $V_2$ are generated using a single inductor $I_{12a}$ by virtue of the inductor $I_{12a}$ being moved to and fro sufficiently quickly relative to the laser beam impingement point $L_p$, covering both preheat zones of the preheat cycles $V_1$

and $V_2$, and the higher heat flux density $p_2$ of the preheat cycle $V_2$ is achieved by virtue of the fact that in this region the speed of advance $v_{Bi}$ of the inductor is lower than in the region which is subjected to the preheat cycle $V_1$.

8. Method according to at least one of Claims 1 to 7, **characterized in that** the maximum temperatures $T_{1max}$ and $T_{2max}$ of the preheat cycles $V_1$ and $V_2$ are achieved by pulsating temperature increases $\Delta T_1{}^*{}_n$ and $\Delta T_2{}^*$, the preheat cycle $V_1$ comprising up to $n \leq 50$ temperature cycles $T_1{}^*{}_n$, and the preheat cycle $V_2$ comprising a maximum of one temperature cycle $T_2{}^*$, and the relationship

$$\Delta T_1{}^*{}_n << \Delta T_2{}^*$$

applying between the temperature increases $\Delta T_1{}^*{}_n$ and $\Delta T_2{}^*$.

9. Method according to Claim 8, **characterized in that** the pulsating temperature increases $\Delta T_1{}^*{}_n$ and $\Delta T_2{}^*$ are generated by a single inductor $I_{12b}$, the longitudinal axes $k_1$ and $k_2$ of the two inductor branches $I_1$ and $I_2$ extend parallel or virtually parallel to the directions $\vec{y}$ and $\vec{x}$, with the relationship $k_{1x} \ll k_{2x}$ applying to the extent of the two inductor branches $I_1$ and $I_2$ in the $\vec{x}$ direction $k_{1x}$ and $k_{2x}$, the laser beam impingement point $L_p$ being located at a constant distance behind the inductor branch $I_2$ in the inductor longitudinal axis, the inductor $I_{12b}$ being moved relative to the workpiece at a path velocity $v_B$, which is predetermined by the laser process, in a direction $\vec{b}$, which includes an angle $\alpha$ with respect to the inductor longitudinal axis $\vec{Kx}$ of the inductor branch $I_2$, with the following relationships being observed:

$$0° \leq \alpha \leq 9°$$

$$v_y = v_B{}^* \sin \alpha$$

$$v_x = v_y * \cot \alpha >> v_y$$

($v_y$ - speed of advance in the y direction, $v_x$ - speed of advance in the x direction).

10. Method according to Claim 9, **characterized in that** the treatment of large, rotationally symmetrical workpieces of radius r takes place in spiral tracks with track spacing a, the angle $\alpha$ between the inductor longitudinal axis $\vec{x}$ of the inductor $I_{2b}$ and the direction $\vec{b}$ of the path velocity $v_B$ being fixed at the value

$$\alpha = \arctan\left(\frac{a}{2\pi r}\right),$$

and the wrap angle $\beta$ of the inductor $I_{12b}$ around the rotationally symmetrical workpiece being $10° \leq \beta \leq 180°$.

11. Method according to Claim 9, **characterized in that** the treatment of large, planar workpiece surfaces takes place in planar, parallel paths, and the angle $\alpha$ has the value $\alpha = 0$.

12. Method according to at least one of Claims 1 to 11, **characterized in that** the maximum temperature $T_{1max}$ of the preheat cycle $V_1$ is only reached right at the start of the preheat cycle $V_2$.

13. Method according to at least one of Claims 1 to 12, **characterized in that** only the preheat cycle $\underline{1}$ is generated inductively, and the preheat cycle $\underline{2}$ is produced by the action of one or more high-power diode lasers.

14. Method according to at least one of Claims 1 to 13, **characterized in that** the gas shielding during the preheat cycle $V_1$ or during the preheat cycles $V_1$ and $V_2$ is selected in such a way that the workpiece is oxidized down to a layer thickness do of $d_0 < 0.5\,\mu m$.

15. Method according to Claim 14, **characterized in that** more extensive oxidation of the workpiece during the preheat cycle $\underline{V_2}$ is avoided by an inert gas blanket which acts predominantly on the preheat zone of the preheat cycle $\underline{V_2}$.

16. Method according to at least one of Claims 1 to 15, **characterized in that** the laser treatment method of the laser process cycle is a build-up welding treatment.

17. Method according to at least one of Claims 1 to 15, **characterized in that** the laser treatment method of the laser process cycle L is a laser alloying or laser gas alloying treatment.

18. Method according to at least one of Claims 1 to 15, **characterized in that** remelting of the surface layer is used as the laser treatment method of the laser process cycle L.

19. Method according to at least one of Claims 1 to 15, **characterized in that** a soldering process is selected as the laser treatment method of the laser process cycle L.

**20.** Method according to at least one of Claims 1 to 19, **characterized in that** in the case of materials which are very susceptible to cracking, a reheat cycle is additionally added on, and the maximum temperature $T_{4max}$ of the reheat cycle $N_1$ is in a temperature range

$$0.25 \leq \frac{T_{4max}[^{\circ}C]}{T_s[^{\circ}C]} \leq 0.8$$

**21.** Method according to Claim 19, **characterized in that** the reheat cycle is also generated inductively.

**22.** Method according to Claim 20, **characterized in that** the inductors $I_1$ and $I_2$ for generating the preheat cycles $V_1$ and $V_2$ are combined with the inductor $I_3$ for generating the reheat cycle $N_1$ to form a single inductor $I_{123}$.

**23.** Method according to at least one of Claims 1 to 22, **characterized in that** when hardenable steels or cast iron are being treated, the temperature $T_{2max}$ of the preheat cycle $V_2$ is greater than the austenitization temperature $T_\gamma$, and **in that** after the corresponding laser process cycle L has ended, the cooling beyond a temperature $T \approx M_S$ is accelerated to such an extent that a martensitic transformation occurs at least beneath and next to the layer which has been heated to temperature $T_{3max} > T_s$ by the laser.

**24.** Method according to at least one of Claims 1 to 23, **characterized in that** a plasma torch is used instead of a laser as highly concentrated energy source for the surface layer treatment with high-energy radiation.

**25.** Method according to at least one of Claims 16, 17 or 19, **characterized in that** the filler material is supplied as a wire.

**26.** Method according to at least one of Claims 16, 17 or 19, **characterized in that** the filler material is supplied as a strip.

**27.** Method according to at least one of Claims 16, 17 or 19, **characterized in that** the filler material is supplied in molten form.

## Revendications

**1.** Procédé pour former des couches superficielles résistant à l'usure par un traitement au laser avec assistance inductive sur des pièces chauffées par induction, **caractérisé en ce que**

a) le préchauffage inductif se fait dans deux cycles de préchauffage $V_1$, $V_2$ qui se suivent directement dans le temps,

b) les champs de températures générés par les deux cycles de préchauffage $V_1$, $V_2$ sont non homogènes et non stationnaires,

c) la densité $p_1$ du flux thermique effectif du premier cycle de préchauffage $V_1$ est inférieure à la densité $p_2$ du flux thermique du second cycle de préchauffage $V_2$,

d) le cycle de préchauffage $V_1$ donne une température maximale $T_{1max}$ en relation avec la température de fusion $T_s$ de la matière de base de la pièce telle que

$$0,2 \leq \frac{T_{1max}[^{\circ}C]}{T_s[^{\circ}C]} \leq 0,6$$

e) la température maximale $T_{2max}$ du cycle de préchauffage $V_2$ se situe dans l'intervalle de température

$$0,3 \leq \frac{T_{2max}[^{\circ}C]}{T_s[^{\circ}C]} \leq \frac{T_s[^{\circ}C]- 50\ K}{T_s[^{\circ}C]}$$

f) la température maximale $T_{3max}$ du cycle de traitement par laser L répond a la relation $T_{3max} > T_s$ et

g) les deux cycles de préchauffage $V_1$ et $V_2$ répondent aux relations suivantes :

$$T_{2max} \geq T_{1max} + 50\ K;$$

$$\left(\frac{\Delta T_{1max}}{\Delta t_1}\right) < \left(\frac{\Delta T_{2max}}{\Delta t_2}\right);$$

$$\Delta t_1 \geq m * \Delta t_2 \ et \ 1,5 \leq m \leq 30$$

$$Z_1 \geq 1,5 * Z_2$$

et dans celles-ci :

| | |
|---|---|
| $\Delta T_{1max}$ et $\Delta T_{2max}$ | sont les augmentations de température, |
| $\Delta t_1$ et $\Delta t_2$ | sont les durées d'action de la chaleur et |
| $Z_1$, $Z_2$ | sont les profondeurs de pénétration de la chaleur au cours des cycles de préchauffage $V_1$, $V_2$. |

**2.** Procédé selon la revendication 1, **caractérisé en ce que** les deux cycles de préchauffage $V_1$, $V_2$ sont réalisés avec deux inductances $I_1$, $I_2$, différentes l'un de l'autre et par rapport au point d'impact du faisceau laser $L_p$, et la densité de flux thermique $p_1$ de l'inductance $I_1$ est inférieure à la valeur correspondante de l'inductance $I_2$, alors que la durée d'action de la chaleur $\Delta t_1$ et la surface active $F_{i1}$ de l'inductance $I_1$ sont supérieures aux valeurs correspondantes de l'inductance $I_2$.

**3.** Procédé selon la revendication 2, **caractérisé en ce que** les deux inductances $I_1$, $I_2$ fonctionnent avec des fréquences différentes telles que $f_1 < f_2$.

**4.** Procédé selon la revendication 3, **caractérisé en ce que** l'inductance $I_1$ fonctionne avec une fréquence moyenne et l'inductance $I_2$ fonctionne avec une haute fréquence.

**5.** Procédé selon la revendication 2, **caractérisé en ce que** les deux inductances $I_1$, $I_2$ sont réunies matériellement en une inductance $I_G$ et on réalise la plus grande densité effective de flux thermique $p_2$ de l'inductance $I_2$ pour une durée d'action thermique $\Delta t_2$ plus courte et une surface d'action $F_{I2}$ plus réduite en augmentant par concentration du champ inductif de petites zones de l'inductance $I_G$, tournées vers le point d'impact $L_p$ du faisceau laser.

**6.** Procédé selon la revendication 5, **caractérisé en ce que** la concentration la plus élevée du champ inductif est réalisée par des éléments d'amplification du champ magnétique, une autre section d'inductance ou une distance plus faible entre les enroulements.

**7.** Procédé selon la revendication 1, **caractérisé en ce que** les deux cycles de préchauffage $V_1$, $V_2$ sont générés pour une unique inductance $I_{12a}$ en déplaçant alternativement l'inductance $I_{12a}$ suffisamment rapidement par rapport au point d'impact du faisceau laser $L_p$, en balayant les deux zones de préchauffage des cycles de préchauffage $V_1$, $V_2$ et on réalise la densité de flux thermique $p_2$ la plus élevée pour le cycle de préchauffage $V_2$ **en ce que** dans cette zone la vitesse d'avance $V_{BI}$ de l'inductance est inférieure à celle dans la zone soumise au cycle de préchauffage $V_1$.

**8.** Procédé selon au moins l'une des revendications 1 à 7, **caractérisé en ce que** les températures maximales $T_{1max}$, $T_{2max}$ des cycles de préchauffage $V_1$, $V_2$ s'obtiennent par des augmentations pulsées de température $\Delta T_1{}^*{}_n$, $\Delta T_2{}^*$, le cycle de préchauffage $V_1$ comprenant jusqu'à $n \leq 50$ cycles de température $T_1{}^*{}_n$ et le cycle de préchauffage $V_2$ se composant au maximum d'un cycle de température $T_2{}^*$, et les augmentations de température $\Delta T_1{}^*{}_n$, $\Delta T_2{}^*$ sont liées par la relation :

$$\Delta T_1{}^*{}_n \ll \Delta T_2{}^*.$$

**9.** Procédé selon la revendication 8, **caractérisé en ce que** les augmentations pulsées de température $\Delta T_1{}^*{}_n$, $\Delta T_2{}^*$ sont générées par une unique inductance $I_{12b}$,

- les axes longitudinaux $k_1$, $k_2$ des deux branches d'inductance $I_1$, $I_2$ sont parallèles ou pratiquement parallèles aux directions $\vec{y}$, $\vec{x}$ et les longueurs $k_{1x}$ et $k_{2x}$ des deux branches d'inductance $I_1$, $I_2$ dans la direction $\vec{x}$ répondent à la relation $k_{1x} \ll k_{2x}$,
- le point d'impact du faisceau laser $L_p$ se trouve à distance constante derrière la branche d'inductance $I_2$ sur l'axe longitudinal de l'inductance, l'inductance $I_{12b}$ se déplace par rapport à la pièce à une vitesse de défilement $v_B$ dans la direction $\vec{b}$, cette vitesse étant prédéfinie par le procédé par laser et cette direction fait un angle $\alpha$ par rapport à l'axe longitudinal $\vec{k}_x$ de la branche d'inductance $I_2$ en répondant aux relations suivantes :

$$0° \leq \alpha \leq 9°$$

$$v_y = v_B {}^* \sin \alpha$$

$$v_x = v_y {}^* \cot \alpha \gg v_y$$

$v_y$ étant la vitesse d'avance dans la direction y
$v_x$ étant la vitesse d'avance dans la direction x.

**10.** Procédé selon la revendication 9, **caractérisé en ce que** le traitement de grandes pièces de rayon (r) symétriques en rotation se fait suivant des chemins en spirale d'écartement pas (a), l'angle $\alpha$ entre l'axe longitudinal x de l'inductance $I_{2b}$ et la direction $\vec{b}$ de la vitesse de défilement $v_B$ étant donné par la relation

$$\alpha = \arctan\left(\frac{a}{2\pi r}\right)$$

et l'angle d'enveloppement $\beta$ de la pièce symétrique en rotation par l'inductance $I_{12b}$ répond à la relation $10° \leq \beta \leq 180°$.

**11.** Procédé selon la revendication 9,
**caractérisé en ce que**
le traitement de grandes surfaces planes de pièces se fait suivant des bandes planes parallèles avec un angle $\alpha$ de valeur $\alpha = 0$.

**12.** Procédé selon au moins l'une des revendications 1 à 11,
**caractérisé en ce que**
les températures maximales $T_{1max}$ du cycle de préchauffage $V_1$ sont atteintes seulement directement au démarrage du cycle de préchauffage $V_2$.

**13.** Procédé selon au moins l'une des revendications 1 à 12,
**caractérisé en ce que**
seul le cycle de préchauffage $V_1$ est généré par induction et le cycle de préchauffage $V_2$ est obtenu par l'action d'un ou plusieurs lasers à diodes de puissance.

**14.** Procédé selon au moins l'une des revendications 1 à 13,
**caractérisé en ce que**
l'écran de gaz protecteur pendant ou les cycles de préchauffage $V_1$, ou $V_1$ $V_2$, est choisi pour oxyder la pièce jusqu'à une épaisseur de couche $d_0$ telle que $d_0 < 0,5$ μm.

**15.** Procédé selon la revendication 14,
**caractérisé en ce qu'**
on évite la poursuite de l'oxydation de la pièce pendant le cycle de préchauffage $\underline{V_2}$ par une couverture de gaz inerte agissant principalement sur la zone de préchauffage du cycle de préchauffage $\underline{V_2}$.

**16.** Procédé selon au moins l'une des revendications 1 à 15,
**caractérisé en ce que**
le procédé de traitement par laser du cycle du procédé par laser L est une charge par soudage.

**17.** Procédé selon au moins l'une des revendications 1 à 15,
**caractérisé en ce que**
le procédé de traitement par laser du cycle de procédé laser L est une opération d'alliage par laser ou d'alliage gaz par laser.

**18.** Procédé selon au moins l'une des revendications 1 à 15,
**caractérisé en ce que**
le procédé de traitement par laser du cycle du procédé par laser L est une refusion de la couche superficielle.

**19.** Procédé selon au moins l'une des revendications 1 à 15,
**caractérisé en ce que**
le procédé de traitement par laser du cycle du procédé par laser L est un brasage.

**20.** Procédé selon au moins l'une des revendications 1 à 19,
**caractérisé en ce que**
pour des matières très fissurables, on poursuit par un cycle de post-chauffage $N_1$ dont la température maximale $T_{4max}$ se situe dans la plage de températures définie comme suit :

$$0,25 \leq \frac{T_{4max}[°C]}{T_s[°C]} \leq 0,8.$$

**21.** Procédé selon la revendication 19,
**caractérisé en ce que**
le cycle de post-chauffage est réalisé également par induction.

**22.** Procédé selon la revendication 20,
**caractérisé en ce que**
les inductances $I_1$ et $I_2$ pour générer les cycles de préchauffage $V_1$, $V_2$ sont réunies à l'inductance $I_3$ pour générer le cycle de post-chauffage $N_1$ en une unique inductance $I_{123}$.

**23.** Procédé selon au moins l'une des revendications 1 à 22,
**caractérisé en ce que**
pour le traitement d'aciers aptes au traitement de trempe et de revenu, ou des fontes d'acier, la température $T_{2max}$ du cycle de préchauffage $V_2$ est supérieure à la température d'austénisation $T\gamma$ et **en ce qu'**après la fin du cycle du procédé par laser correspondant L, on accélère le refroidissement à partir d'une température $T \approx M_s$ de façon qu'au moins en dessous et à côté de la couche chauffée par le laser à la température $T_{3max} > T_s$, on réalise une conversion martensitique de la couche réchauffée.

**24.** Procédé selon au moins l'une des revendications 1 à 23,
**caractérisé en ce qu'**
on utilise un brûleur au plasma avec un rayonnement riche en énergie à la place d'un laser comme source d'énergie fortement concentrée pour le traitement de la couche superficielle.

**25.** Procédé selon au moins l'une des revendications 16, 17 ou 19,
**caractérisé en ce que**
le matériau d'apport est fourni sous la forme d'un fil.

**26.** Procédé selon au moins l'une des revendications 16, 17 ou 19,
**caractérisé en ce que**
le matériau d'apport est fourni sous la forme d'un ruban.

**27.** Procédé selon au moins l'une des revendications 16, 17 ou 19,
**caractérisé en ce que**
le matériau d'apport est fourni à l'état fondu.

a)

b)

Fig. 1: Schematische Darstellung einer erfindungsgemäßen Anordnung (a) und Temperaturführung (b) zum induktiv unterstützten Laserauftragschweißen am Beispiel einer korrosiv

Fig. 2: Schematische Darstellung der erfindungsgemäßen Temperatur-Zeit-Sequenz

**— — —**     konventionelles Laserauftragschweißen

**————**     erfindungsgemäßer Temperatur-Zeit-Verlauf

**— — — —·**     Temperatur-Zeit-Verlauf nach Ofenvorwärmen und kurzzeitigem induktivem Vorwärmen auf eine max. Vorwärmtemperatur $T_{2max} = 800\ °C$ (Yoshiwaru, Kawanami; PS EP 0190378A1)

**— ·· •**     Temperatur-Zeit-Verlauf bei einstufigem induktivem Vorwärmen auf eine max. Vorwärmtemperatur $T_{2max} \approx 800\ °C$ (Brenner et. al; HTM)

**— · — ··**     Temperatur-Zeit-Verlauf bei einstufigem induktivem Vorwärmen auf eine max. Vorwärmtemperatur $T_{2max} \leq 800\ °C$ mit Konstanthaltung der Vorwärmtemperatur während der Laserbehandlung (Guilloud et. al; PS EP 0462047B1)

Fig. 3: Schematischer Vergleich des erfindungsgemäßen Temperatur-Zeit-Zyklus mit den aus dem Stand der Technik bekannten Temperatur-Zeit-Zyklen

Fig. 4: Schematische Darstellung einer erfindungsgemäßen Anordnung zum induktiv unterstützten Laserauftragschweißen